# EUROPEAN PATENT SPECIFICATION

(11) **EP 3 805 287 B1**
(45) Date of publication and mention of the grant of the patent: **10.01.2024**
(21) Application number: 19810755.9
(22) Date of filing: 23.05.2019
(51) Int. Cl.: C08G 18/75, C08G 18/65, G02B 1/11, G02C 7/00, C08G 18/32, B29D 11/00, B29D 12/02, C08G 18/10, C08G 18/12, C08G 18/24, C08G 18/42, C08G 18/44, C08G 18/48, C08G 18/72, C08G 18/73, G02B 1/115

(54) **THERMOPLASTIC POLYURETHANE RESIN, OPTICAL POLYURETHANE RESIN, COVER PLATE FOR DISPLAY PANEL, EYEWEAR MATERIAL, EYEWEAR LENS, EYEWEAR FRAME, AUTOMOTIVE INTERIOR AND EXTERIOR COMPONENTS, AND METHOD FOR PRODUCING THERMOPLASTIC POLYURETHANE RESIN**
THERMOPLASTISCHES POLYURETHANHARZ, OPTISCHES POLYURETHANHARZ, ABDECKPLATTE FÜR ANZEIGETAFEL, BRILLENMATERIAL, BRILLENGLAS, BRILLENGESTELL, KFZ-INNEN- UND -AUSSENTEILE SOWIE VERFAHREN ZUR HERSTELLUNG EINES THERMOPLASTISCHEN POLYURETHANHARZES
RÉSINE DE POLYURÉTHANE THERMOPLASTIQUE, RÉSINE DE POLYURÉTHANE OPTIQUE, PLAQUE DE COUVERTURE POUR PANNEAU D'AFFICHAGE, MATÉRIAU DE LUNETTES, VERRE DE LUNETTES, MONTURE DE LUNETTES, COMPOSANTS INTÉRIEURS ET EXTÉRIEURS D'AUTOMOBILE, ET PROCÉDÉ DE PRODUCTION DE RÉSINE DE POLYURÉTHANE THERMOPLASTIQUE

(30) Priority: 30.05.2018 JP 2018103190
(43) Date of publication of application: 14.04.2021
(73) Proprietor: Mitsui Chemicals, Inc., Tokyo 104-0028 (JP)
(72) Inventor: SHINOHARA, Naoki, Sodegaura-shi, Chiba 299-0265 (JP); KAGEOKA, Masakazu, Sodegaura-shi, Chiba 299-0265 (JP); YAMASAKI, Satoshi, Tokyo 104-0028 (JP)
(74) Representative: Hoffmann Eitle
(86) International application number: PCT/JP2019/020372
(87) International publication number: WO 2019/230541

(56) References cited:
- EP-A1- 3 037 411
- EP-A1- 3 051 331
- EP-A1- 3 222 644
- WO-A1-2015/046369
- WO-A1-2015/046370
- JP-A- 2017 519 052

## Description

### TECHNICAL FIELD

The present invention relates to thermoplastic polyurethane resin, optical polyurethane resin, display panel cover plate, eyewear material, eyewear lens, eyewear frame, automobile interior/exterior component, and method for producing thermoplastic polyurethane resin.

### BACKGROUND ART

Thermoplastic polyurethane resin (TPU) is generally a rubber elastic material produced by reaction of polyisocyanate, a high molecular-weight polyol, and a low molecular-weight polyol, and includes a hard segment formed by reaction of polyisocyanate and a low molecular-weight polyol, and a soft segment formed by reaction of polyisocyanate and a high molecular-weight polyol. By melting and molding such thermoplastic polyurethane resin, a molded article composed of polyurethane resin can be produced.

For the thermoplastic polyurethane resin, to be more specific, Patent Document 2 has proposed thermoplastic polyurethane produced by allowing, for example, 4,4'-methylene diphenyl diisocyanate, polytetramethylene ether glycol with a molecular weight of 1000, isosorbide, and butanediol (ref: for example, Patent Document 2 (Example 2A)).

Patent Document 1 has proposed, for the thermoplastic polyurethane resin, for example, a rigid thermoplastic polyurethane produced by allowing 1,3- and 1,4-bis(isocyanatomethyl) cyclohexane, cyclohexanedimethanol (CHDM-D), 1,6-hexanediol, and polytetramethylene ether glycol to react (ref: for example, Patent Document 1 (Example 2)).

### Citation List

### Patent Document

Patent Document 1: Japanese Unexamined Patent Application Publication (Translation of PCT Application) 2017-519052
Patent Document 2: Japanese Unexamined Patent Application Publication (Translation of PCT Application) 2010-528158

### SUMMARY OF THE INVENTION

### PROBLEM TO BE SOLVED BY THE INVENTION

Meanwhile, various physical properties are required for a molded article of thermoplastic polyurethane depending on its use, and for example, in the field of covers of smart devices, appearance, transparency, mechanical properties (hardness, etc.), and durability (impact resistance, heat resistance, chemical resistance, solvent resistance, etc.) have to be achieved at the same time.

However, the thermoplastic polyurethane described in Patent Documents 1 and 2 may not have sufficient appearance, transparency, mechanical properties (hardness, etc.), and durability (impact resistance, heat resistance, chemical resistance, solvent resistance, etc.).

The present invention relates to thermoplastic polyurethane resin having appearance, transparency, mechanical properties, and durability altogether, and optical polyurethane resin, a display panel cover plate, eyewear material, eyewear lens, eyewear frame, automobile interior/exterior component, and a method for producing thermoplastic polyurethane resin.

### MEANS FOR SOLVING THE PROBLEM

The present invention [1] includes thermoplastic polyurethane resin including a reaction product of a polyisocyanate component containing 50 mol% or more of an isocyanate group of 1,4-bis(isocyanatomethyl) cyclohexane relative to a total mol of the isocyanate group, and a polyol component containing macropolyol, isosorbide, and aliphatic diol with 3 to 8 carbon atoms; wherein relative to a total mol of the isosorbide and the aliphatic diol, the isosorbide content is 60 mol% or more and 95 mol% or less.

The present invention [2] includes the thermoplastic polyurethane resin of [1] above, wherein the 1,4-bis(isocyanatomethyl) cyclohexane contains 70 mol% or more and 95 mol% or less of trans-1,4-bis(isocyanatomethyl) cyclohexane.

The present invention [3] includes thermoplastic polyurethane resin of [1] or [2] above, wherein the aliphatic diol is straight chain alkane diol with 3 to 5 carbon atoms and/or cyclic alkane diol with 6 to 8 carbon atoms.

The present invention [4] includes the thermoplastic polyurethane resin of any one of the above-described [1] to [3], wherein the macropolyol contains polyoxy straight chain alkylene (2 to 4 carbon atoms) polyol with a number average molecular weight of 600 or more and 1300 or less.

The present invention [5] includes the thermoplastic polyurethane resin of any one of the above-described [1] to [4], containing 0.1 to 0.8 parts by mass of a phosphorous acid antioxidant relative to 100 parts by mass of the reaction product.

The present invention [6] includes optical polyurethane resin including the thermoplastic polyurethane resin of any one of the above-described [1] to [5].

The present invention [7] includes a cover plate for a display panel of a smart device, including the optical polyurethane resin of [6] above.

The present invention [8] includes an eyewear material including the thermoplastic polyurethane resin described in any one of the above-described [1] to [5].

The present invention [9] includes an eyewear lens including the eyewear material of [8] above.

The present invention [10] includes an eyewear lens of [9] above, including a lens main portion including the eyewear material, and a hard coat layer and/or an anti-reflective layer formed on at least one side of the lens main portion.

The present invention [11] includes an eyewear frame including the eyewear material of [8] above.

The present invention [12] includes an automobile interior/exterior component including the thermoplastic polyurethane resin of any one of the above-described [1] to [5].

The present invention [13] includes a method for producing thermoplastic polyurethane resin, the method including: a prepolymer synthesis step, in which at least allowing a polyisocyanate component containing 50 mol% or more of an isocyanate group of 1,4-bis(isocyanatomethyl) cyclohexane relative to a total mol of the isocyanate group to react with macropolyol to produce an isocyanate group-terminated prepolymer; and a chain extension step, in which the isocyanate group-terminated prepolymer, isosorbide, and aliphatic diol with 3 to 8 carbon atoms are at least allowed to react and cure to produce thermoplastic polyurethane resin, wherein relative to a total mol of the isosorbide and the aliphatic diol, the isosorbide content is 60 mol% or more and 95 mol% or less.

The present invention [14] includes the method for producing thermoplastic polyurethane resin of [13] above, wherein the curing temperature in the chain extension step is 150^{°}C or more and 240^{°}C or less.

### Effects of the Invention

The thermoplastic polyurethane resin, optical polyurethane resin, display panel cover plate, eyewear material, eyewear lens, eyewear frame, and automobile interior/exterior component of the present invention contains, as material components, a predetermined ratio of 1,4-bis(isocyanatomethyl) cyclohexane, macropolyol, a predetermined ratio of aliphatic diol with 3 to 8 carbon atoms and isosorbide, and therefore appearance, transparency, mechanical properties, and durability can be achieved at the same time.

Furthermore, with the method for producing thermoplastic polyurethane resin of the present invention, thermoplastic polyurethane resin with appearance, transparency, mechanical properties, and durability altogether can be produced easily.

### DESCRIPTION OF EMBODIMENTS

The thermoplastic polyurethane resin of the present invention is produced by allowing a material component containing a polyisocyanate component and a polyol component to react (described later).

In other words, the thermoplastic polyurethane resin contains a reaction product of a polyisocyanate component and a polyol component as a main component. The main component accounts for, for example, 90 mass% or more, preferably 95 mass% or more relative to a total amount of the thermoplastic polyurethane resin (thermoplastic polyurethane resin composition).

The polyisocyanate component contains, as an essential component, 1,4-bis(isocyanatomethyl) cyclohexane (1,4-H₆XDI).

To be more specific, the polyisocyanate component contains, relative to a total mol of the isocyanate group, 50 mol% or more, preferably 70 mol% or more, more preferably 80 mol% or more, more preferably 90 mol% or more, particularly preferably 100 mol% of the isocyanate group of 1,4-bis(isocyanatomethyl) cyclohexane.

There are stereoisomers of 1,4-bis(isocyanatomethyl) cyclohexane, i.e., cis-1,4-bis(isocyanatomethyl) cyclohexane (hereinafter referred to as cis-1,4-bic) and trans-1,4-bis(isocyanatomethyl) cyclohexane (hereinafter referred to as trans-1,4-bic).

In the present invention, 1,4-bis(isocyanatomethyl) cyclohexane contains the trans-1,4-bic at a ratio of, for example, 60 mol% or more, preferably 70 mol% or more, more preferably 80 mol% or more, more preferably 85 mol% or more, for example, 99. 8 mol% or less, preferably 99 mol% or less, more preferably 95 mol% or less, more preferably 90 mol% or less.

The amount of trans-1,4-bic and cis-1,4-bic in total is 100 mol%.

That is, 1,4-bis(isocyanatomethyl) cyclohexane contains cis-1,4-bic at a ratio of, for example, 0.2 mol% or more, preferably 1 mol% or more, more preferably 5 mol% or more, more preferably 10 mol% or more, and for example, 40 mol% or less, preferably 30 mol% or less, more preferably 20 mol% or less, more preferably 15 mol% or less.

When the trans-1,4-bic content is in the above-described range, transparency, mechanical properties, and durability can be improved.

1,4-bis(isocyanatomethyl) cyclohexane can be produced by, for example, a method described in WO2009/051114.

The 1,4-bis(isocyanatomethyl) cyclohexane can be prepared as a modified 1,4-bis(isocyanatomethyl) cyclohexane, to the extent that does not hinder the excellent effects of the present invention.

Examples of the modified 1,4-bis(isocyanatomethyl) cyclohexane include a multimer (dimer (for example, uretdione-modified product, etc.), trimer (for example, isocyanurate-modified product, iminooxadiazine dione-modified product, etc.), etc.), biuret-modified product (for example, biuret-modified product produced by reaction of bis(isocyanatomethyl) cyclohexane and water, etc.), allophanate-modified product (for example, allophanate-modified product produced by reaction of bis(isocyanatomethyl) cyclohexane and monohydric alcohol or dihydric alcohol, etc.), polyol-modified product (for example, polyol-modified product (adduct) produced by reaction of bis(isocyanatomethyl) cyclohexane and trihydric alcohol, etc.), oxadiazinetrione-modified product (for example, oxadiazinetrione produced by reaction of bis(isocyanatomethyl) cyclohexane and carbon dioxide, etc.), carbodiimide-modified product (for example, carbodiimide-modified product produced by decarboxylation condensation reaction of bis(isocyanatomethyl) cyclohexane, etc.) of bis(isocyanatomethyl) cyclohexane.

The polyisocyanate component can contain other polyisocyanates as an optional component to the extent that does not hinder the excellent effects of the present invention.

Examples of the other polyisocyanates include aliphatic polyisocyanate, aromatic polyisocyanate, and araliphatic polyisocyanate.

Examples of the aliphatic polyisocyanate include ethylene diisocyanate, trimethylene diisocyanate, tetramethylene diisocyanate, pentamethylene diisocyanate (PDI), hexamethylene diisocyanate (HDI), octamethylene diisocyanate, nonamethylene diisocyanate, 2,2'-dimethyl pentane diisocyanate, 2,2,4-trimethyl hexane diisocyanate, decamethylene diisocyanate, butene diisocyanate, 1,3-butadiene-1,4-diisocyanate, 2,4,4-trimethyl hexamethylene diisocyanate, 1,6,11-undecamethylene triisocyanate, 1,3,6-hexamethylene triisocyanate, 1,8-diisocyanate-4-isocyanatomethyl octane, 2,5,7-trimethyl-1,8-diisocyanate-5-isocyanatomethyl octane, bis(isocyanato ethyl) carbonate, bis(isocyanato ethyl) ether, 1,4-butylene glycol dipropyl ether-ω, ω'-diisocyanate, lysine isocyanatomethyl ester, lysine triisocyanate, 2-isocyanato ethyl-2,6-diisocyanate hexanoate, 2-isocyanato propyl-2,6-diisocyanate hexanoate, bis(4-isocyanate-n-butylidene) pentaerythritol, and 2,6-diisocyanate methyl caproate.

Aliphatic polyisocyanate include alicyclic polyisocyanate (excluding 1,4-bis(isocyanatomethyl) cyclohexane).

Examples of the alicyclic polyisocyanate (excluding 1,4-bis(isocyanatomethyl) cyclohexane) include isophorone diisocyanate (IPDI), trans, trans-, trans, cis-, and cis, cis -dicyclohexyl methane diisocyanate and a mixture thereof (H₁₂MDI), 1,3- or 1,4-cyclohexane diisocyanate and a mixture thereof, 1,3-bis(isocyanatomethyl) cyclohexane (1,3-H₆XDI), 1,3- or 1,4-bis(isocyanato ethyl) cyclohexane, methyl cyclohexane diisocyanate, 2,2'-dimethyl dicyclohexyl methane diisocyanate, dimer acid diisocyanate, 2,5-diisocyanatomethyl bicyclo [2,2,1]-heptane, 2,6-diisocyanatomethyl bicyclo [2,2,1]-heptane (NBDI) (isomer thereof), 2-isocyanatomethyl 2-(3-isocyanato propyl) -5-isocyanatomethyl bicyclo -[2,2,1]-heptane, 2-isocyanatomethyl -2-(3-isocyanato propyl) -6-isocyanatomethyl bicyclo -[2,2,1]-heptane, 2-isocyanatomethyl 3-(3-isocyanato propyl) -5-(2-isocyanato ethyl) -bicyclo -[2,2,1]-heptane, 2-isocyanatomethyl 3-(3-isocyanato propyl) -6-(2-isocyanato ethyl) -bicyclo -[2,2,1]-heptane, 2-isocyanatomethyl 2-(3-isocyanato propyl) -5-(2-isocyanato ethyl) -bicyclo -[2,2,1]-heptane, and 2-isocyanatomethyl 2-(3-isocyanato propyl) -6-(2-isocyanato ethyl) -bicyclo -[2,2,1]-heptane.

Examples of the aromatic polyisocyanate include 2,4-tolylene diisocyanate and 2,6-tolylene diisocyanate, and isomer mixtures of these tolylene diisocyanates (TDI), 4,4'-diphenylmethane diisocyanate, 2,4'-diphenylmethane diisocyanate and 2,2'-diphenylmethane diisocyanate, and arbitrary isomer mixtures of these diphenylmethane diisocyanates (MDI), toluidine diisocyanates (TODI), paraphenylene diisocyanates, and naphthalene diisocyanates (NDI).

Examples of the araliphatic polyisocyanate include 1,3- or 1,4-xylylene diisocyanate or a mixture thereof (XDI), 1,3- or 1,4-tetra methyl xylylene diisocyanate or a mixture thereof (TMXDI).

These other polyisocyanates may be used singly or in combination of two or more.

The other polyisocyanate can be prepared as a modified product, to the extent that does not hinder the excellent effects of the present invention.

Examples of the modified product of the other polyisocyanate include multimers (dimer, trimer, etc.), biuret-modified, allophanate-modified, polyol-modified, oxadiazinetrione-modified, and carbodiimide-modified products of the other polyisocyanate.

For the other polyisocyanate (that is, polyisocyanate that can be used with 1,4-bis(isocyanatomethyl) cyclohexane), preferably, aliphatic polyisocyanate and (including alicyclic polyisocyanate), more preferably, hexamethylene diisocyanate, isophorone diisocyanate, dicyclohexyl methane diisocyanate, 1,3-bis(isocyanatomethyl) cyclohexane, diisocyanatomethyl bicyclo [2,2,1]-heptane are used, even more preferably, hexamethylene diisocyanate, dicyclohexyl methane diisocyanate, diisocyanatomethyl bicyclo [2,2,1]-heptane are used, and particularly preferably, hexamethylene diisocyanate is used.

The other polyisocyanate content relative to a total amount of the polyisocyanate component is, for example, 50 mass% or less, preferably 30 mass% or less, more preferably 20 mass% or less.

Relative to a total mol of the isocyanate group of the polyisocyanate component, the ratio of the isocyanate group of the other polyisocyanate is, for example, 50 mol% or less, preferably 30 mol% or less, more preferably 20 mol% or less, more preferably 10 mol% or less, particularly preferably 0 mol%.

For the polyisocyanate component, particularly preferably, 1,4-bis(isocyanatomethyl) cyclohexane is used singly.

In the present invention, the polyol component is a composition containing a compound containing two or more hydroxyl groups in its molecule. To be specific, the polyol component contains macropolyol, isosorbide, and aliphatic diol with 3 to 8 carbon atoms, and preferably, the polyol component consists of macropolyol, isosorbide, and aliphatic diol with 3 to 8 carbon atoms.

Macropolyol is an organic compound (polymer) having two or more hydroxyl groups and a number average molecular weight of 400 or more, preferably 500 or more, and examples thereof include polyether polyol, polyester polyol, polycarbonate polyol, polyurethane polyol, epoxy polyol, vegetable oil polyol, poly olefin polyol, acrylic polyol, and vinyl monomer-modified polyol. Preferably, polyether polyol, polyester polyol, and polycarbonate polyol are used.

Examples of the polyether polyol include polyoxy straight chain alkylene (2 to 4 carbon atoms) polyol, polyoxy branched open-chain alkylene (3 to 4 carbon atoms) polyol, and polyoxy straight chain-branched open-chain alkylene (2 to 4 carbon atoms) polyol.

Polyoxy straight chain alkylene (2 to 4 carbon atoms) polyol is polyoxy alkylene polyol having a straight chain oxy alkylene unit, having no branched open-chain oxy alkylene unit, and having an oxy alkylene unit with 2 to 4 carbon atoms.

To be more specific, examples of the polyoxy straight chain alkylene (2 to 4 carbon atoms) polyol include polyoxy ethylene polyol, poly trimethylene ether glycol, and polytetramethylene ether glycol.

For the polyoxy ethylene polyol, an addition polymerization product of ethylene oxide using a low molecular-weight polyol and a known low molecular-weight polyamine as an initiator is used.

For the low molecular-weight polyol, an organic compound having two or more hydroxyl groups in its molecule and a molecular weight of 50 or more and less than 400, preferably 300 or less is used.

For the low molecular-weight polyol, to be specific, the following can be used: for example, dihydric alcohols such as 1,2-ethylene glycol, 1,2-propylene glycol, 1,3-propanediol, 1,4-butanediol, 1,3-butanediol, 1,2-butanediol, 1,5-pentanediol, 1,6-hexanediol, neopentyl glycol, 3-methyl -1,5-pentanediol, 2,2,2-trimethylpentane diol, 3,3-dimethylolheptane, alkane (C7to 20) diol, 1,3- or 1,4-cyclohexanedimethanol and a mixture thereof; 1,3- or 1,4-cyclohexanediol and a mixture thereof; hydrogenated bisphenol A, 1,4-dihydroxy-2-butene, 2,6-dimethyl-1-octene-3,8-diol, bisphenol A; ether diol with 4 to 6 carbon atoms (diethylene glycol, triethylene glycol, dipropylene glycol, etc.); trihydric alcohols such as, for example, glycerine, trimethylolpropane, and tri isopropanol amine; tetrahydric alcohols such as, for example, tetra methylol methane (pentaerythritol), and diglycerol; pentahydric alcohols such as, for example, xylitol; hexahydric alcohols such as, for example, sorbitol, mannitol, allitol, iditol, dulcitol, altritol, inositol, and dipentaerythritol; heptahydric alcohols such as, for example, perseitol; and octahydric alcohols such as sucrose.

These low-molecular-weight polyols may be used singly or in combination of two or more.

For the low molecular-weight polyol, preferably, dihydric alcohol, and trihydric alcohol are used, and more preferably, dihydric alcohol is used.

For the polyoxy ethylene polyol, to be specific, polyoxy ethylene glycol, and polyoxy ethylene triol are used, and preferably, polyoxy ethylene glycol is used.

Examples of the poly trimethylene ether glycol include glycol produced by polycondensation reaction of plant-component derived 1,3-propanediol.

Examples of the polytetramethylene ether polyol include a ring-opening polymerization product (polytetramethylene ether glycol (crystalline)) obtained by cationic polymerization of tetrahydrofuran, and amorphous (noncrystalline) polytetramethylene ether glycol obtained by copolymerizing alkylated tetrahydrofuran or the above-mentioned dihydric alcohol with a polymerization unit of tetrahydrofuran.

The polyoxy branched open-chain alkylene (3 to 4 carbon atoms) polyol is polyoxy alkylene polyol having a branched open-chain oxy alkylene unit, having no straight chain oxy alkylene unit, and having an oxy alkylene unit with 3 to 4 carbon atoms.

To be more specific, examples of the polyoxy branched open-chain alkylene (3 to 4 carbon atoms) polyol include an addition polymerization product of propylene oxide and butylene oxide in which the above-described low molecular-weight polyol and a known low molecular-weight poly amine are used as an initiator.

In other words, examples of the polyoxy branched open-chain alkylene (3 to 4 carbon atoms) polyol include polyoxy propylene polyol (polyoxy -1,2-propylene polyol) and polyoxy butylene polyol (polyoxy -1,2- or -1,3-butylene polyol). For the polyoxy branched open-chain alkylene (3 to 4 carbon atoms) polyol, preferably, polyoxy propylene polyol is used.

Polyoxy straight chain-branched open-chain alkylene (2 to 4 carbon atoms) polyol is polyoxyalkylene polyol having both a straight chain oxy alkylene unit and a branched open-chain oxy alkylene unit, and an oxy alkylene unit with 2 to 4 carbon atoms.

To be more specific, examples of the polyoxy straight chain-branched open-chain alkylene (2 to 4 carbon atoms) polyol include a random and/or block copolymer of propylene oxide and ethylene oxide in which the above-described low molecular-weight polyol and a known low molecular-weight poly amine are used as an initiator.

These polyether polyols may be used singly or in combination of two or more.

For the polyether polyol, in view of appearance, mechanical properties, and durability, preferably, polyoxy straight chain alkylene (2 to 4 carbon atoms) polyol is used, more preferably, polyoxy straight chain alkylene (2 to 4 carbon atoms) glycol is used, even more preferably, polytrimethylene ether glycol, and polytetramethylene ether glycol are used.

Examples of the polyester polyol include a polycondensation product produced by reaction of a low molecular-weight polyol and polybasic acid under known conditions.

Examples of the low molecular-weight polyol include the above-described low molecular-weight polyols, and preferably, dihydric alcohol is used, more preferably, propylene glycol and neopentyl glycol are used.

Examples of the polybasic acid include saturated aliphatic dicarboxylic acid (C11 to 13) such as oxalic acid, malonic acid, succinic acid, methyl succinic acid, glutaric acid, adipic acid, 1,1-dimethyl-1,3-dicarboxy propane, 3-methyl -3-ethyl glutaric acid, azelaic acid, and sebacic acid; unsaturated aliphatic dicarboxylic acid such as maleic acid, fumaric acid, and itaconic acid; aromatic dicarboxylic acid such as phthalic acid, isophthalic acid, terephthalic acid, toluene dicarboxylic acid, and naphthalene dicarboxylic acid; alicyclic dicarboxylic acid such as hexahydrophthalic acid; other carboxylic acid such as dimer acid, hydrogenated dimer acid, and het acid, and acid anhydride derived from these carboxylic acids; for example, oxalic anhydride, succinic anhydride, maleic anhydride, phthalic anhydride, 2-alkyl (C12 to C18) succinic anhydride, tetrahydrophtalic anhydride, and trimellitic anhydride; and furthermore, acid halides derived from these carboxylic acids; for example, oxalic acid dichloride, adipic acid dichloride, and sebacic acid dichloride.

These polybasic acids may be used singly or in combination of two or more.

For the polybasic acid, preferably, saturated aliphatic dicarboxylic acid, aromatic dicarboxylic acid, and acid anhydride are used, more preferably, adipic acid, phthalic acid, and phthalic anhydride are used, even more preferably, adipic acid is used.

Examples of the polyester polyol include plant derived polyester polyol, to be specific, vegetable oil polyester polyols obtained by condensation reaction of hydroxycarboxylic acid such as hydroxyl group-containing vegetable oil fatty acid (e.g., castor oil fatty acid containing ricinoleic acid, hydrogenated castor oil fatty acid containing 12-hydroxystearic acid, etc.) using the above-described low-molecular-weight polyol as an initiator under known conditions.

Examples of the polyester polyol include polycaprolactone polyol and polyvalerolactone polyol obtained by ring-opening polymerization of lactones such as ε-caprolactone, γ-valerolactone, etc. and lactides such as L-lactide and D-lactide using the above-described low-molecular-weight polyols (preferably dihydric alcohol) as an initiator; and further lactone-based polyester polyols such as alcohol-modified lactone polyol obtained by copolymerizing such a polycaprolactone polyol or polyvalerolactone polyol with the above-described dihydric alcohol.

These polyester polyols may be used singly or in combination of two or more.

For the polyester polyol, preferably, the lactone-based polyester polyol, more preferably, polycaprolactone polyol is used.

Examples of the polycarbonate polyol include ring-opening polymerization product (crystalline polycarbonate polyol) of ethylene carbonate in which the above-described low molecular-weight polyol (preferably, the above-described dihydric alcohol) is used as an initiator, and noncrystalline polycarbonate polyol produced by copolymerizing dihydric alcohol with 4 to 6 carbon atoms and a ring-opening polymerization product.

These polycarbonate polyols may be used singly or in combination of two or more.

These macropolyols may be used singly or in combination of two or more.

For the macropolyol, in view of improving mechanical properties and durability, preferably, polyether polyol is used, more preferably, polyoxy straight chain alkylene (2 to 4 carbon atoms) polyol is used, even more preferably, polyoxy straight chain alkylene (2 to 4 carbon atoms) glycol is used, particularly preferably, polytrimethylene ether glycol, and polytetramethylene ether glycol are used.

The macropolyol has an average hydroxyl number (in accordance with JIS K 1557-1(2007)) of, for example, 10 mgKOH/g or more, preferably 20 mgKOH/g or more, more preferably 40 mgKOH/g or more, and for example, 500 mgKOH/g or less, preferably 300 mgKOH/g or less, more preferably 100 mgKOH/g or less.

In view of appearance, mechanical properties, and durability, the macropolyol has a number average molecular weight (polystyrene based molecular weight by GPC analysis) of, 400 or more, preferably 500 or more, more preferably 600 or more, more preferably 800 or more, and for example, 5000 or less, preferably 3000 or less, more preferably 1300 or less, more preferably 1200 or less.

Isosorbide is a compound (diol compound) having two hydroxyl groups, and to be specific, 1,4: 3,6-dianhydroglucitol (also called: 1,4:3,6-dianhydro sorbitol).

Isosorbide can be produced by a known method, or can be obtained from a commercially available product.

Aliphatic diol with 3 to 8 carbon atoms (in the following, may be referred to as C3 to 8 aliphatic diol) is a compound having a hydrocarbon group with 3 to 8 carbon atoms and two hydroxyl groups, and for example, open-chain alkane diol with 3 to 8 carbon atoms and cyclic alkane diol with 3 to 8 carbon atoms are used.

Examples of the open-chain alkane diol with 3 to 8 carbon atoms include straight chain alkane diol with 3 to 8 carbon atoms such as 1,3-propanediol, 1,4-butanediol, 1,5-pentanediol, 1,6-hexanediol, 1,7-heptanediol, and 1,8-octanediol; branched open-chain alkane diol with 3 to 8 carbon atoms such as 1,2-propylene glycol, 1,3-butylene glycol, 1,2-butylene glycol, neopentyl glycol, 3-methyl-1,5-pentanediol, and 2,2,2-trimethylpentane diol.

These examples of the open-chain alkane diol with 3 to 8 carbon atoms can be used singly, or can be used in combination of two or more.

For the open-chain alkane diol with 3 to 8 carbon atoms, in view of durability, preferably, straight chain alkane diol with 3 to 8 carbon atoms, more preferably, straight chain alkane diol with 3 to 5 carbon atoms is used.

Examples of the cyclic alkane diol with 3 to 8 carbon atoms include alicyclic diol with 6 to 8 carbon atoms in total such as 1,2-cyclo propanediol, 1,2- or 1,3-cyclo butanediol, 1,2- or 1,3-cyclo pentanediol, 1,2-, 1,3- or 1,4-cyclohexanediol, 1,2-, 1,3- or 1,4-cyclo heptanediol, 1,2-, 1,3-, 1,4- or 1,5-cyclo octanediol, and 2,2,4,4-tetra methyl-1,3-cyclo butanediol; alicyclic dimethanol with 6 to 8 carbon atoms in total such as 1,2-cyclopropane dimethanol, 1,2- or 1,3-cyclobutane dimethanol, 1,2- or 1,3-cyclo pentane dimethanol, and 1,2-, 1,3- or 1,4-cyclohexanedimethanol; alicyclic diethanol with 6 to 8 carbon atoms in total such as 1,2-cyclopropane diethanol, and 1,2- or 1,3-cyclobutane diethanol.

For the cyclic alkane diol with 3 to 8 carbon atoms, preferably, cyclic alkane diol with 6 to 8 carbon atoms is used, more preferably, alicyclic dimethanol with 6 to 8 carbon atoms is used.

These C3 to 8 aliphatic diols may be used singly or in combination of two or more.

When aliphatic diol (ethylene glycol, etc.) with two carbon atoms is used as aliphatic diol, appearance and transparency will be poor. When aliphatic diol (decanediol, etc.) with carbon atoms of 9 or more is used, mechanical properties and durability will be poor. Therefore, for aliphatic diol, aliphatic diol with 3 to 8 carbon atoms is used.

For the C3 to 8 aliphatic diol, in view of appearance, transparency, mechanical properties, and durability, preferably, straight chain alkane diol with 3 to 5 carbon atoms and/or cyclic alkane diol with 6 to 8 carbon atoms are used, more preferably, 1,3-propanediol, 1,4-butanediol, 1,5-pentanediol, and 1,4-cyclohexanedimethanol are used, more preferably 1,3-propanediol, and 1,4-butanediol are used.

In the polyol component, the ratio of the high molecular-weight polyol, isosorbide, and C3 to 8 aliphatic diol is adjusted in the range of the reaction equivalent ratio to be described later.

For example, relative to 100 parts by mass of a total amount of the polyol component, the high molecular-weight polyol content is, for example, 35 parts by mass or more, preferably 45 parts by mass or more, and for example, 75 parts by mass or less, preferably 65 parts by mass or less; the isosorbide content is, for example, 20 parts by mass or more, preferably 30 parts by mass or more, and for example, 55 parts by mass or less, preferably 45 parts by mass or less; and the C3 to 8 aliphatic diol content is, for example, 2 parts by mass or more, preferably 5 parts by mass or more, and for example, 30 parts by mass or less, preferably 20 parts by mass or less.

Relative to 100 parts by mass of the high molecular-weight polyol, the isosorbide content is, for example, 40 parts by mass or more, preferably 50 parts by mass or more, and for example, 100 parts by mass or less, preferably 90 parts by mass or less.

Relative to 100 parts by mass of the high molecular-weight polyol, the C3 to 8 aliphatic diol content is, for example, 3 parts by mass or more, preferably 5 parts by mass or more, and for example, 30 parts by mass or less, preferably 20 parts by mass or less.

Relative to 100 mol of the high molecular-weight polyol, the isosorbide content is, for example, 200 mol or more, preferably 250 mol or more, and for example, 800 mol or less, preferably 700 mol or less, and the C3 to 8 aliphatic diol content is, for example, 30 mol or more, preferably 50 mol or more, and for example, 350 mol or less, preferably 250 mol or less.

Relative to 100 mol of the high molecular-weight polyol, the isosorbide and C3 to 8 aliphatic diol in total is, for example, 230 mol or more, preferably 300 mol or more, and for example, 1150 mol or less, preferably 950 mol or less.

In view of achieving appearance, transparency, mechanical properties, and durability altogether, relative to a total mol of isosorbide and C3 to 8 aliphatic diol, the isosorbide content is, 60 mol% or more, preferably 65 mol% or more, more preferably 70 mol% or more, more preferably 75 mol% or more, particularly preferably 78 mol% or more, 95 mol% or less, preferably 90 mol% or less, more preferably 88 mol% or less, more preferably 85 mol% or less, particularly preferably 83 mol% or less. The C3 to 8 aliphatic diol content is, for example, 5 mol% or more, preferably 10 mol% or more, more preferably 12 mol% or more, more preferably 15 mol% or more, particularly preferably 17 mol% or more, and for example, 40 mol% or less, preferably 35 mol% or less, more preferably 30 mol% or less, more preferably 25 mol% or less, particularly preferably 22 mol% or less.

On mass basis, relative to a total mass of isosorbide and C3 to 8 aliphatic diol, the isosorbide content is, for example, 70 mass% or more, preferably 75 mass% or more, more preferably 78 mass% or more, more preferably 80 mass% or more, and for example, 98 mass% or less, preferably 93 mass% or less, more preferably 90 mass% or less, more preferably 88 mass% or less. The C3 to 8 aliphatic diol content is, for example, 2 mass% or more, preferably 5 mass% or more, more preferably 8 mass% or more, more preferably 10 mass% or more, and for example, 30 mass% or less, preferably 25 mass% or less, more preferably 23 mass% or less, more preferably 20 mass% or less.

When the ratios of isosorbide and C3 to 8 aliphatic diol are in the above-described range, thermoplastic polyurethane resin achieving appearance, transparency, mechanical properties, and durability altogether can be produced.

The thermoplastic polyurethane resin can be produced by allowing the above-described material component to react. In the reaction of the material component, a known method such as, for example, one shot method and prepolymer method are used. In view of improving appearance, transparency, mechanical properties, and durability, preferably, prepolymer is used.

In the prepolymer method, first, the polyisocyanate component is allowed to react with macropolyol to synthesize an isocyanate-terminated prepolymer (prepolymer synthesis step).

To be more specific, in the prepolymer synthesis step, the polyisocyanate component and macropolyol are allowed to react by a polymerization method such as, for example, bulk polymerization and solution polymerization.

In bulk polymerization, for example, under nitrogen flow, the polyisocyanate component and macropolyol are allowed to react at a reaction temperature of, for example, 50^{°}C or more, for example, 250^{°}C or less, preferably 200^{°}C or less, for, for example, 0.5 hours or more, for example, 15 hours or less.

In solution polymerization, the polyisocyanate component and macropolyol are added to an organic solvent and the mixture is allowed to react at a reaction temperature of, for example, 50^{°} C or more, for example, 120^{°}C or less, preferably 100^{°}C or less, and for example, 0.5 hours or more, for example, 15 hours or less.

Examples of the organic solvent include ketones such as acetone, methyl ethyl ketone, methyl isobutyl ketone, and cyclohexanone; nitriles such as acetinitrile; alkyl esters such as methyl acetate, ethyl acetate, butyl acetate, and isobutyl acetate; aliphatic hydrocarbons such as n-hexane, n-heptane, and octane; alicyclic hydrocarbons such as cyclohexane and methyl cyclohexane; aromatic hydrocarbons such as toluene, xylene, and ethyl benzene; glycol ether esters such as methyl cellosolve acetate, ethyl cellosolve acetate, methyl carbitol acetate, ethyl carbitol acetate, ethylene glycol ethyl ether acetate, propylene glycol methyl ether acetate, 3-methyl-3-methoxy butyl acetate, and ethyl-3-ethoxy propionate; ethers such as diethyl ether, tetrahydrofuran, and dioxane; halogenated aliphatic hydrocarbons such as methyl chloride, methylene chloride, chloroform, carbon tetrachloride, methyl bromide, methylene iodide, and dichloro ethane; polar aprotic solvents such as N-methylpyrrolidone, dimethylformamide, N,N'-dimethylacetamide, dimethyl sulfoxide, and hexamethyl phosphonyl amide.

In the above-described polymerization reaction, as necessary, a known urethanizing catalyst such as amines and organometallic compounds can be added.

Examples of the amines include tertiary amines such as triethylamine, triethylenediamine, bis-(2-dimethylaminoethyl) ether, and N-methylmorpholine; quaternary ammonium salts such as tetraethyl hydroxyl ammonium; and imidazoles such as imidazole and 2-ethyl-4-methylimidazole.

Examples of the organometallic compound include organotin compounds such as tin acetate, tin octoate (stannous octoate), tin oleate, tin laurate, dibutyl tin diacetate, dimethyl tin dilaurate, dibutyl tin dilaurate, dibutyl tin dimercaptide, dibutyl tin maleate, dibutyl tin dineodecanoate, dioctyl tin dimercaptide, dioctyl tin dilaurate, and dibutyl tin dichloride; organic lead compounds such as octanoic acid lead and lead naphthenate; organic nickel compounds such as nickel naphthenate; organic cobalt compounds such as cobalt naphthenate; organic copper compounds such as octenoic acid copper; organic bismuth compounds such as octanoic acid bismuth (octylic acid bismuth) and bismuth neodecanoate, and preferably, tin octylate and bismuth octylate are used.

Examples of the urethanizing catalysts also include potassium salts such as potassium carbonate, potassium acetate, and potassium octoate.

These urethanizing catalysts may be used singly or in combination of two or more.

The urethanizing catalyst is added in an amount of, relative to 10000 parts by mass of a total amount of the polyisocyanate component and macropolyol, for example, 0.001 parts by mass or more, preferably 0.01 parts by mass or more, and for example, 1 part by mass or less, preferably 0.5 parts by mass or less.

In the above-described polymerization reaction, the unreacted polyisocyanate component, and the organic solvent, when it is used, are removed by a known removal method by, for example, distillation or extraction.

In the prepolymer synthesis step, the components are blended so that the equivalent ratio (isocyanate group /hydroxyl group) of the isocyanate group in the polyisocyanate component relative to the hydroxyl group in the macropolyol is, for example, 1.3 or more, preferably 1.5 or more, and for example, 20 or less, preferably 15 or less, more preferably 10 or less, more preferably 8 or less.

To be specific, in the prepolymer synthesis step, the mixing ratio of the components relative to 100 parts by mass of the macropolyol is as follows: the polyisocyanate component is blended in an amount of, for example, 10 parts by mass or more, preferably 20 parts by mass or more, and for example, 200 parts by mass or less, preferably 150 parts by mass or less.

In this method, the above-described components are allowed to react until the isocyanate group content reaches, for example, 5.0 mass% or more, more preferably 10.0 mass% or more, and for example, 30.0 mass% or less, preferably 25.0 mass% or less. The isocyanate group-terminated prepolymer can be produced in this manner.

The amount of the isocyanate group contained (isocyanate group content) can be determined by a known method such as titration with di-n-butyl amine or FT-IR analysis.

Then, in this method, the isocyanate group-terminated prepolymer produced as described above, isosorbide and C3 to 8 aliphatic diol are subjected to chain extension reaction (curing reaction) to produce a reaction product of a polyisocyanate component and a polyol component (chain extension step).

That is, in this method, isosorbide and C3 to 8 aliphatic diol are a chain extender.

In the chain extension step, the isocyanate group-terminated prepolymer, isosorbide, and C3 to 8 aliphatic diol are allowed to react by a polymerization method such as, for example, the above-described bulk polymerization or the above-described solution polymerization.

In the chain extension step, the components are blended so that the equivalent ratio (isocyanate group/hydroxyl group) of the isocyanate group in the isocyanate group-terminated prepolymer relative to a total amount of the hydroxyl group in the isosorbide and the hydroxyl group in the C3 to 8 aliphatic diol is, for example, 0.75 or more, preferably 0.9 or more, and for example, 1.3 or less, preferably 1.1 or less.

To be more specific, in the chain extension step, the components are blended so that a total amount of isosorbide and C3 to 8 aliphatic diol relative to 100 parts by mass of the isocyanate group-terminated prepolymer is, for example, 1.0 part by mass or more, preferably 2.0 parts by mass or more, more preferably 3.0 parts by mass or more, and for example, 50 parts by mass or less, preferably 40 parts by mass or less, more preferably 30 parts by mass or less.

In the chain extension step, to adjust the hard segment concentration of the thermoplastic polyurethane resin produced, other than isosorbide and C3 to 8 aliphatic diol, macropolyol can be blended at a suitable ratio.

Furthermore, in this reaction, as necessary, the above-described urethanizing catalyst can be added. The urethanizing catalyst can be blended to the isocyanate group-terminated prepolymer, isosorbide and/or C3 to 8 aliphatic diol, or can be added separately when they are blended.

The curing temperature (reaction temperature) in the chain extension step is, for example, room temperature (23^{°}C) or more, preferably 100^{°}C or more, more preferably 150^{°}C or more, and for example, 300^{°}C or less, preferably 260^{°}C or less, more preferably 240^{°}C or less.

The curing time (reaction time) is, for example, 30 minutes or more, preferably 1 hour or more, and for example, 48 hours or less, preferably 24 hours or less.

When the curing temperature and curing time are within the above-described range, thermoplastic polyurethane resin achieving appearance, transparency, mechanical properties, and durability altogether can be produced.

In the chain extension step, as necessary, after the above-described curing reaction (primary heating), secondary heating can be carried out to complete the reaction.

The secondary heating temperature is, for example, room temperature (23^{°}C) or more, preferably 50^{°}C or more, more preferably 80^{°}C or more, and for example, 200^{°}C or less, preferably 160^{°}C or less, more preferably 140^{°}C or less.

The secondary heating time is, for example, 3 hours or more, preferably 5 hours or more, and for example, 72 hours or less, preferably 48 hours or less.

The chain extension reaction can be completed by such secondary heating to produce a reaction product of the above-described polyisocyanate component and the above-described polyol component, and to produce the thermoplastic polyurethane resin.

Furthermore, the produced thermoplastic polyurethane resin can be aged as necessary at, for example, a room temperature (23^{°}C) to 40^{°}C, for, for example, 1 to 7 days.

The thermoplastic polyurethane resin contains, as material components, a predetermined ratio of 1,4-bis(isocyanatomethyl) cyclohexane, macropolyol, a predetermined ratio of aliphatic diol with 3 to 8 carbon atoms and isosorbide, and therefore appearance, transparency, mechanical properties, and durability can be achieved at the same time.

With the above-described method for producing thermoplastic polyurethane resin, thermoplastic polyurethane resin achieving appearance, transparency, mechanical properties, and durability altogether can be produced easily.

For the method of producing the above-described reaction product, when one-shot method is used, the polyisocyanate component, polyol component (macropolyol, isosorbide and C3 to 8 aliphatic diol) are blended simultaneously and mixed so that the equivalent ratio (isocyanate group/hydroxyl group) of the isocyanate group in the polyisocyanate component relative to the hydroxyl group in the polyol component is, for example, 0.9 or more, preferably 0.95 or more, more preferably 0.98 or more, and for example, 1.2 or less, preferably 1.1 or less, more preferably 1.08 or less.

The stirring and mixing are carried out under conditions of; for example, under inert gas (for example, nitrogen) atmosphere, at a reaction temperature of, for example, 40^{°}C or more, preferably 100^{°}C or more, and for example, 280^{°}C or less, preferably 260^{°}C or less, for a reaction time of, for example, 30 seconds or more and 1 hour or less.

When stirring and mixing, as necessary, the above-described urethanizing catalyst and organic solvent can be added at a suitable ratio.

With such a method as well, a reaction product of the above-described polyisocyanate component and the above-described polyol component can be produced, and thermoplastic polyurethane resin can be produced.

The thermoplastic polyurethane resin can contain, other than the reaction product of the above-described polyisocyanate component and the above-described polyol component, as necessary, phosphorous acid antioxidant.

Examples of the phosphorous acid antioxidant include phosphites such as triphenyl phosphite, tris nonyl phenyl phosphite, tri cresyl phosphite, tri ethyl phosphite, tris (2-ethyl hexyl) phosphite, tri decyl phosphite, tri lauryl phosphite, tris (tri decyl) phosphite, tri oleyl phosphite, diphenyl mono(2-ethyl hexyl) phosphite, diphenyl monodecyl phosphite, diphenyl mono(tri decyl) phosphite, tri lauryl tri thio phosphite, diethyl hydrogen phosphite, tetra phenyl dipropylene glycol diphosphite, tetra phenyl (tetra tri decyl) pentaerythritol tetra phosphite, phthalic acid bis(2-ethyl hexyl), tetra (C12 to C15 alkyl) -4,4'-isopropylidene diphenyl diphosphite, bis(tri decyl) pentaerythritol diphosphite, bis(nonyl phenyl) pentaerythritol diphosphite, bis(decyl) pentaerythritol diphosphite, bis(tri decyl) pentaerythritol diphosphite, tri stearyl phosphite, distearyl pentaerythritol diphosphite, tris (2,4-di-tert-butyl phenyl) phosphite, hydrogenated bisphenol A-pentaerythritol phosphite polymer, and hydrogenated bisphenol A phosphite polymer.

These phosphorous acid antioxidants may be used singly or in combination of two or more.

For the phosphorous acid antioxidant, preferably, phosphites are used, more preferably, bis(decyl) pentaerythritol diphosphite is used.

The phosphorous acid antioxidant can be added to, for example, the above-described polyisocyanate component and/or the above-described polyol component, or can be added at the time when thy are blended, or can be added after they are blended.

The phosphorous acid antioxidant content relative to 100 parts by mass of the reaction product of the above-described polyisocyanate component and the above-described polyol component, for example, 0.05 parts by mass or more, preferably 0.10 parts by mass or more, more preferably 0.30 parts by mass or more, and for example, 2.0 parts by mass or less, preferably 1.0 part by mass or less, more preferably 0.8 parts by mass or less.

When the phosphorous acid antioxidant content is in the above-described range, particularly, thermoplastic polyurethane resin with excellent appearance, transparency, mechanical properties, and durability can be produced.

The material component can contain, as necessary, other known additives. Examples of such an additive include a heat-resistant stabilizer, ultraviolet absorber, light stabilizer, antioxidant (excluding phosphorous acid antioxidant), hydrolysis prevention agent, plasticizer, anti-blocking agent, release agent, pigment, dye, lubricant, filler, antirust agent, and filler. These additives can be added when the components are mixed, or at the time of synthesis or after synthesis.

Examples of the heat-resistant stabilizer include, without particular limitation, a known heat-resistant stabilizer (for example, as shown in BASF catalog), to be specific, phosphorus-based processing heat stabilizer, lactone-based processing heat stabilizer, and sulfur-based processing heat stabilizer are used.

Examples of the ultraviolet absorber include, without particular limitation, a known ultraviolet absorber (for example, as shown in BASF catalog), to be more specific, for example, benzotriazole ultraviolet absorber, triazine ultraviolet absorber, and benzophenone ultraviolet absorber are used.

Examples of the light stabilizer include, without particular limitation, a known light stabilizer (for example, as shown in ADEKA catalog), to be more specific, for example, benzoate light stabilizer, and hindered amine light stabilizer are used.

The amount of these additives added is suitably set in accordance with purpose and use.

The additive can be added to, for example, the above-described polyisocyanate component and/or the above-described polyol component, or can be added at the time when thy are blended, or can be added after they are blended.

Then, the thermoplastic polyurethane resin is molded by a known molding method, and then used as various molded articles.

To be more specific, the molded article of the thermoplastic polyurethane resin can be produced by, for example, subjecting the above-described thermoplastic polyurethane resin to a known molding method such as the following to mold it into a form such as, for example, pellets, plates, fiber, strands, films, sheets, pipes, hollow form, and boxes: heat compression molding and injection molding using a specific mold, and extrusion molding using a sheet wind-up device; heat mold processing method such as melt spinning molding.

Then, the produced molded article can achieve appearance, transparency, mechanical properties, and durability altogether. Therefore, the molded article can be suitably used in the field in which the above-described various physical properties are required.

To be more specific, the above-described thermoplastic polyurethane resin is suitably used in optical polyurethane resin.

The optical polyurethane resin including the above-described thermoplastic polyurethane resin achieves appearance, transparency, mechanical properties, and durability altogether, and therefore desired optical properties are satisfied, and furthermore, it is excellently practical.

Therefore, optical polyurethane resin can be suitably used for, for example, a display panel cover plate.

Examples of the display panel include display panels for information processing terminals such as smart devices (smartphone, tablet computer (tablet PC), slate computer (slate PC), etc.), desktop computer, and laptop computer. These display panels generally include image display panels such as liquid crystal panels, and to protect the image display panel, a translucent cover plate (display panel cover plate) is laminated on the surface of the image display panel.

Such a display panel cover plate requires excellent appearance, transparency, mechanical properties, and durability. Therefore, the molded article of the above-described optical polyurethane resin is suitable for a display panel cover plate.

In other words, a cover plate for displays produced by using the above-described optical polyurethane resin has excellent appearance, transparency, mechanical properties, and durability altogether.

The above-described thermoplastic polyurethane resin is suitably used for, for example, an eyewear material.

The eyewear material is a material for forming an eyewear lens and an eyewear frame of eyewear such as, for example, correcting glasses, protection glasses, sunglasses, and goggles.

That is, for the eyewear lens and eyewear frame, excellent appearance, transparency, and mechanical properties and durability may be required.

Therefore, the above-described thermoplastic polyurethane resin is suitably used as an eyewear material, and the molded article of the thermoplastic polyurethane is used suitably as, for example, an eyewear lens and an eyewear frame.

To be specific, in production of an eyewear lens, the eyewear material including the above-described thermoplastic polyurethane resin is formed into a lens shape by a known method to form a lens main portion. Thereafter, preferably, on at least one side of the lens main portion, a hard coat layer and/or an anti-reflective layer are laminated. The eyewear lens is produced in this manner.

The hard coat layer can be of a known configuration, and for example, a Si coat layer including silicon oxide, tri methoxy methyl silane, and hydrolyzed products thereof are used. The anti-reflective layer can be of a known configuration, and for example, a layer of vapor deposited metal such as metal oxide (silicon oxide, zirconium oxide, etc.) is used. The hard coat layer and anti-reflective layer each can be a single layer, or multilayers.

In the production of eyewear frames, the eyewear material including the above-described thermoplastic polyurethane resin is formed into the shapes of parts of the eyewear frame by a known method.

Examples of the eyewear frame parts include lens, nose pads, earpiece (ear pads), temple (string portion), rim (lens surrounding), bridge (rim connecting portion), end piece (front both end portions), and hinge (connecting portion between end piece and temple).

Such an eyewear frame and eyewear lens include the above-described thermoplastic polyurethane resin, and therefore appearance, transparency, mechanical properties, and durability are achieved altogether.

Furthermore, the above-described thermoplastic polyurethane resin is suitably used as an automobile interior/exterior component.

Examples of the automobile interior/exterior component include a known automobile interior/exterior component such as an automobile bumper, head lamp, tail lamp, instrument panel, shift lever, and handle.

The parts forming such automobile interior/exterior components (for example, head lamp cover, tail lamp cover, instrument panel cover, shift lever knob, handle grip portion, etc.) may be required to have excellent appearance, transparency, mechanical properties, and durability.

Therefore, the molded article of the above-described thermoplastic polyurethane resin is suitably used for an automobile interior/exterior component.

To be specific, in production of an automobile interior/exterior component, the above-described thermoplastic polyurethane resin is formed into various shapes of the automobile interior/exterior component by a known method. The automobile interior/exterior component is produced in this manner.

Such an automobile interior/exterior component includes the above-described thermoplastic polyurethane resin, and therefore appearance, transparency, mechanical properties, and durability are achieved altogether.

The molded article of the thermoplastic polyurethane resin is applicable industrially and widely other than the above-described use, and to be specific, suitably used for the following: for example, transparent rigid plastic, coating material, pressure sensitive adhesive, adhesive, waterproof material, potting agent, ink, binder, film, sheet, and band (for example, band for watch; for example, transmission belt for automobiles, conveyer belt for various industries (conveyer belt), tube (for example, other than the components such as medical tube and cathether, tubes such as air tube, hydraulic tube, and electrical wire tube; for example, hoses such as fire hose), blade, speaker, sensors, sealing material for high brightness LED, organic EL member, solar power generation member, robot member, android member, wearable member, apparel component, sanitary products, cosmetic products, food packing material, sports product, leisure products, medical products, caretaking products, house making goods; audio members; lighting members; chandeliers; street light; encapsulating materials; sealing materials; cork; gaskets; vibration isolation-seismic motion mitigation-base isolation members; acoustic insulation members; commodities; miscellaneous goods; cushions; beddings; stress absorbers; stress relievers; interior and exterior members for automobiles; railroad members, aerospace members, optical members; OA device members; protection members for surfaces of miscellaneous goods; semiconductor sealing materials; self-repairing materials; health goods; lenses for glasses, toys, cable sheath, wire harness, telecommunication cable, automobile wire, computer wires, and industrial use products such as curl cord; caretaking products such as sheets and films, sports products, leisure products, miscellaneous goods, vibration isolation-seismic isolation members, shock absorbing material, optical member, films such as light guiding film, automobile components, surface protection sheet, cosmetics sheet, transferring sheet, tape members such as semiconductor protection tapes, golf ball member, strings for tennis racket, films for agriculture, wall paper, antifog agent, nonwoven fabric, furniture such as mattress and sofa, apparel products such as brassiere or shoulder pad, paper diapers, sanitary pads, medical products such as cushion material for medical tapes, sanitary products such as cosmetic products, face washing puff, and pillow; shoe products such as shoe sole (out sole), mid sole, and cover material; body-pressure distribution products such as pad and cushion for vehicles, parts where touched with hands such as door trim, instrument panel, and gear knob; heat insulating materials for electric refrigerator and architectures; shock absorbing materials such as shock absorber, filler, semiconductor production products such as chemical-mechanical polishing (CMP) pad.

Furthermore, the above-described molded article can be suitably used for use in which resiliency and anti-abrasion from repeated contraction and expansion and compression deformation are required, such as the following: coating material (for film, sheet, belt, wire, electric wire, metal spinning machine, wheel, and drill), yarns and fiber (yarns and composite fiber used for tube, tights, leggings, sportswear, bathing suit), extrusion molding use (for gut and its binding material for tennis and badminton), slush molding products in powder form by micro pelletizing, artificial leather, skin, sheet, coating roll (coating roll for iron steel), sealant, roller, gear, cover or core material for ball and bat (for golf ball, basketball, tennis ball, volleyball, soft ball, bat (these can be in the form of foamed and molded thermoplastic polyurethane resin)), mat, skiing products, boots, tennis products, grips (grips for golf clubs and bicycles), rack boot, wiper, sheet cushion member, films for caretaking products, 3D printer molded article, fiber reinforcing material (reinforcing material for fiber such as carbon fiber, lignin, Kenaf, nanocellulose fiber, glass fiber), safety goggle, sunglass, frames for glasses, skiing goggle, swimming goggle, contact lens, gas assisted foamed and molded article, shock absorber, CMP polishing pad, dumper, bearing, dust cover, cutting valve, chipping roll, high-speed rotation roller, tire, watch, and wearable band.

### Examples

The present invention is described in detail in the following with reference to Production Examples, Synthesis Examples, Examples, and Comparative Examples, but the present invention is not limited to these. In the description below, "parts" and "%" are based on mass unless otherwise specified. The specific numerical values of mixing ratio (content), physical property value, and parameter used in the description below can be replaced with the upper limit values (numerical values defined with "or less" or "below") or lower limit values (numerical values defined with "or more" or "more than") of the corresponding numerical values of mixing ratio (content), physical property value, and parameter described in **"DESCRIPTION OF EMBODIMENTS"** above.

### <Production of 1,4-bis(isocyanatomethyl) cyclohexane (1,4-H₆XDI)>

### Production Example 1

### Method for producing 1,4-bis(isocyanatomethyl) cyclohexane (1) (hereinafter referred to as 1,4-BIC(1))

1,4-bis(amino methyl) cyclohexane having a purity of 99.5% or more and a trans isomer/cis isomer ratio of 98/2 was produced with a yield of 92% in accordance with Production Example 6 of Japanese Unexamined Patent Publication No. 2014-55229.

Thereafter, using the 1,4-bis(amino methyl) cyclohexane as a material, hot-cold 2-stage phosgenation method was carried out under pressure, thereby producing 382 parts by mass of 1,4-BIC(1) in accordance with Production Example 1 of Japanese Unexamined Patent Publication No. 2014-55229.

The produced 1,4-BIC(1) had a purity measured by gas chromatography of 99.9%, and a trans isomer/cis isomer ratio measured by ¹³C-NMR of 98/2.

### Production Example 2

### Method for producing 1,4-bis(isocyanatomethyl) cyclohexane (2) (hereinafter referred to as 1,4-BIC(2))

A four-neck flask equipped with a stirrer, thermometer, reflux pipe, and nitrogen inlet tube was charged with 789 parts by mass of 1,4-BIC(1) of Production Example 1, 211 parts by mass of 1,4-BIC(4) of Production Example 4 described later, and the mixture was stirred in a nitrogen atmosphere at room temperature for 1 hour. The produced 1,4-BIC(2) had a purity measured by gas chromatography of 99.9%, and a trans/cis ratio measured by ¹³C-NMR of 86/14.

### Production Example 3

### Method for producing 1,4-bis(isocyanatomethyl) cyclohexane (3) (hereinafter referred to as 1,4-BIC(3))

A four-neck flask equipped with a stirrer, thermometer, reflux pipe, and nitrogen inlet tube was charged with 474 parts by mass of 1,4-BIC(1) of Production Example 1, and 526 parts by mass of 1,4-BIC(4) of Production Example 4 described later, and the mixture was stirred in a nitrogen atmosphere at room temperature for 1 hour. The produced 1,4-BIC(3) had a purity measured by gas chromatography of 99.9%, and a trans/cis ratio measured by ¹³C-NMR of 68/32.

### Production Example 4

### Method for producing 1,4-bis(isocyanatomethyl) cyclohexane (4) (hereinafter referred to as 1,4-BIC(4))

Using 1,4-bis(amino methyl) cyclohexane having a trans isomer/cis isomer ratio measured by ¹³C-NMR of 41/59 (manufactured by Tokyo Chemical Industry Co., Ltd.) as a material, 388 parts by mass of 1,4-BIC(4) was produced in accordance with Production Example 1 of Japanese Unexamined Patent Publication No. 2014-55229.

The produced 1,4-BIC(4) had a purity measured by gas chromatography of 99.9%, and a trans isomer/cis isomer ratio measured by ¹³C-NMR of 41/59.

<Production and molding of thermoplastic polyurethane resin>

### Example 1

A four-neck flask equipped with a stirrer, thermometer, reflux pipe, and nitrogen inlet tube was charged with 33. 51 parts by mass of PTG1000SN(P) (manufactured by Hodogaya Chemical Co., LTD., polytetramethylene ether glycol using biomass material, number average molecular weight 1000), and then 41.89 parts by mass of 1,4-BIC(2) having a trans/cis ratio of 86/14 was added so that the equivalent ratio (NCO/OH) was 6.50. Reaction was carried out until the isocyanate group content was 20.32 mass%, thereby producing an isocyanate group-terminated prepolymer (in the following, may be abbreviated as prepolymer).

75.71 parts by mass of prepolymer prepared in advance to be 80^{°}C, 0.30 parts by mass of IRGANOX 245 (manufactured by BASF, heat-resistant stabilizer), 0.25 parts by mass of TINUVIN 234 (manufactured by BASF, ultraviolet absorber), 0.09 parts by mass of ADK STAB LA-72 (manufactured by ADEKA, light stabilizer), 0.5 parts by mass of JPE-10 (manufactured by Johoku Chemical Co. Ltd., phosphorous acid antioxidant), and 0.013 parts by mass of catalyst liquid, in which Stanoct (manufactured by API corporation, stannous octanoate) was diluted in DINA (manufactured by J-PLUS Co., Ltd. diisononyl adipate) to be 4 mass%, were put into a stainless steel vessel, and the mixture was stirred and mixed using a high-speed Disper at 800rpm for about 2 minutes.

Then, a mixture of isosorbide (manufactured by ROQUETTE, POLYSORB P) and 1,4-butanediol (1,4-BD, manufactured by Mitsubishi Chemical Corporation.) (isosorbide: 1,4-BD = 80:20(molar ratio)) as a chain extender was adjusted to be 80^{°}C, and the mixture added to the prepolymer so that the equivalent ratio (NCO/OH) was 1.00.

Thereafter, the mixture was sufficiently mixed for about 10 minutes so that the whole mixture was homogenous, and immediately after the stop of mixing, homogeneity of the reaction mixture liquid was checked. Thereafter, the reaction mixture liquid was poured into a Teflon^{®} sheet on a SUS (stainless steel) vat with a temperature adjusted in advance to be 180^{°}C, and allowed to react at 180^{°}C for 2 hours, and then at 100^{°}C for 20 hours, thereby producing thermoplastic polyurethane resin.

The thermoplastic polyurethane resin was taken out from the vat, and aged for 3 days under constant temperature and constant humidity of a room temperature of 23^{°}C and a relative humidity of 50%.

Thereafter, the thermoplastic polyurethane was cut with a bale cutter into dice, and the diced resin was ground with a grinder. The ground pellet was dried under nitrogen flow at 80^{°} C for a whole day. Using a uniaxial extruder (model: SZW40-28MG, manufactured by TECHNOVEL), strands were extruded with a cylinder temperature in the range of 185 to 250^{°}C, and they were cut, thereby producing thermoplastic polyurethane pellets. The produced pellets were further dried for a whole day under a nitrogen flow at 80^{°}C.

Then, using an injection molding machine (model: SE-180DU, manufactured by Sumitomo Heavy Industries, Ltd.) with a cylinder temperature range of 185 to 250^{°}C, and a nozzle temperature range of 185 to 245^{°}C, the pellets were subjected to injection molding, thereby producing a thermoplastic polyurethane resin sheet (thickness 2.0 mm), a lens main portion (thickness 2.0 mm, diameter 75 mm, plano, 4 curve), and a block (10 cm × 10 cm × thickness 12 mm).

To the lens main portion, a hard coat layer and an anti-reflective layer were laminated by the following processing.

That is, the lens main portion was subjected to annealing at 120^{°}C for 3 hours, and thereafter it was washed in a 10% aqueous sodium hydroxide solution at 50^{°}C for 10 minutes in an ultrasonic cleaner, and thereafter, washed with isopropanol and then the surface was dried at 50^{°} C.

Then, the lens main portion was immersed in a hard coat composition containing silicon oxide, tri methoxy methyl silane, and hydrolysed product thereof, and taken out at a speed of 150 mm/min. Thereafter, the hard coat composition was preheated at 80^{°}C for 10 minutes, and then heated at 120^{°}C for 6 hours to be cured. In this manner, a hard coat layer was formed on the surface of the lens main portion.

Thereafter, on the lens main portion on which the hard coat layer was formed, a five-layered multilayer anti-reflective layer composed of silicon oxide and zirconium oxide was formed on the hard coat layer using a vacuum deposition device.

An eyewear lens including the lens main portion, hard coat layer, and anti-reflective layer was produced in this manner.

### Example 2

Thermoplastic polyurethane resin was produced in the same manner as in Example 1, except that the amount of PTG1000SN(P) of Example 1 was changed to 33.51 parts by mass, 1,4-BIC(2) was changed to 42.20 parts by mass, and the molar ratio of isosorbide to 1,4-butanediol (isosorbide: 1,4-BD) was changed to 75:25; and a sheet, block, and eyewear lens were molded.

### Comparative Example 1

Thermoplastic polyurethane resin was produced in the same manner as in Example 1, except that the amount of PTG1000SN(P) of Example 1 was changed to 33.51 parts by mass, 1,4-BIC(2) was changed to 43.27 parts by mass, molar ratio of isosorbide to 1,4-butanediol (isosorbide: 1,4-BD) was changed to 58:42; and a sheet, block, and eyewear lens were molded.

### Comparative Example 2

Thermoplastic polyurethane resin was produced in the same manner as in Example 1, except that the amount of PTG1000SN(P) of Example 1 was changed to 33.51 parts by mass, 1,4-BIC(2) was changed to 40.90 parts by mass, and the molar ratio of isosorbide to 1,4-butanediol (isosorbide: 1,4-BD) was changed to 97:3; and a sheet, block, and eyewear lens were molded.

### Comparative Example 3

Thermoplastic polyurethane resin was produced in the same manner as in Example 1, except that the amount of PTG1000SN(P) of Example 1 was changed to 32.21 parts by mass, and instead of 1,4-BIC(2), a mixture of 16.66 parts by mass of 1,4-BIC(2) and 26. 53 parts by mass of diisocyanatomethyl bicyclo [2,2,1]-heptane (NBDI, manufactured by Mitsui Chemicals, Inc.) (1,4-BIC: NBDI = 40:60(molar ratio)) was used; and a sheet, block, and eyewear lens were molded.

### Comparative Example 4

Thermoplastic polyurethane resin was produced in the same manner as in Example 1, except that the amount of PTG1000SN(P) of Example 1 was changed to 33.51 parts by mass, 1,4-BIC(2) was changed to 42.06 parts by mass, and instead of the mixture of isosorbide and 1,4-butanediol, a mixture of 1,4-cyclohexanedimethanol (manufactured by NAGASE & CO., LTD., CHDM-D) and 1,4-butanediol (CHDM-D:1,4-BD = 80:20(molar ratio)) was used; and a sheet, block, and eyewear lens were molded.

### Comparative Example 5

Thermoplastic polyurethane resin was produced in the same manner as in Example 1, except that the amount of PTG1000SN(P) of Example 1 was changed to 33.51 parts by mass, 1,4-BIC(2) was changed to 40.73 parts by mass, and instead of the mixture of isosorbide and 1,4-butanediol, 25.76 parts by mass of isosorbide was used; and a sheet, block, and eyewear lens were molded.

### Example 3

Thermoplastic polyurethane resin was produced in the same manner as in Example 1, except that the amount of PTG1000SN(P) of Example 1 was changed to 33.51 parts by mass, and instead of 1,4-BIC(2), 41. 89 parts by mass of 1,4-BIC(1) having a trans/cis ratio of 98/2 was used; and a sheet, block, and eyewear lens were molded.

### Example 4

Thermoplastic polyurethane resin was produced in the same manner as in Example 1, except that the amount of PTG1000SN(P) of Example 1 was changed to 33.51 parts by mass, and instead of 1,4-BIC(2), 41.89 parts by mass of 1,4-BIC(3) having a trans/cis ratio of 68/32 was used; and a sheet, block, and eyewear lens were molded.

### Example 5

Thermoplastic polyurethane resin was produced in the same manner as in Example 1, except that the amount of PTG1000SN(P) of Example 1 was changed to 33.51 parts by mass, 1,4-BIC(2) was changed to 41.59 parts by mass, and instead of the mixture of isosorbide and 1,4-butanediol, a mixture of isosorbide and 1,5-pentanediol (1,5-PeD manufactured by Ube Industries, Ltd.) was used (isosorbide: 1,5-PeD = 80:20(molar ratio)); and a sheet, block, and eyewear lens were molded.

### Example 6

Thermoplastic polyurethane resin was produced in the same manner as in Example 1, except that the amount of PTG1000SN(P) of Example 1 was changed to 33.51 parts by mass, 1,4-BIC(2) was changed to 41.89 parts by mass, and instead of the mixture of isosorbide and 1,4-butanediol, a mixture of isosorbide and 1,3-butanediol (1,3-BD manufactured by Wako Pure Chemical Industries, Ltd.) (isosorbide: 1,3-BD = 80:20(molar ratio)) was used; and a sheet, block, and eyewear lens were molded.

### Example 7

Thermoplastic polyurethane resin was produced in the same manner as in Example 1, except that the amount of PTG1000SN(P) of Example 1 was changed to 33.51 parts by mass, 1,4-BIC(2) was changed to 42.20 parts by mass, and instead of the mixture of isosorbide and 1,4-butanediol, a mixture of isosorbide and 1,3-propanediol (1,3-PrD manufactured by DuPont, Susterra^{®}, 1,3-propanediol using biomass material) (isosorbide: 1,3-PrD = 80:20 (molar ratio)) was used; and a sheet, block, and eyewear lens were molded.

### Example 8

Thermoplastic polyurethane resin was produced in the same manner as in Example 1, except that the amount of PTG1000SN(P) of Example 1 was changed to 33.51 parts by mass, 1,4-BIC(2) was changed to 40.77 parts by mass, and instead of the mixture of isosorbide and 1,4-butanediol, a mixture of isosorbide and 1,4-cyclohexanedimethanol (manufactured by NAGASE & CO., LTD., CHDM-D) (isosorbide: CHDM-D = 80:20 (molar ratio)); and a sheet, block, and eyewear lens were molded.

### Example 9

Thermoplastic polyurethane resin was produced in the same manner as in Example 1, except that the amount of PTG1000SN(P) of Example 1 was changed to 33.51 parts by mass, 1,4-BIC(2) was changed to 41.30 parts by mass, molar ratio of isosorbide to 1,4-butanediol (isosorbide: 1,4-BD) was changed to 90:10; and a sheet, block, and eyewear lens were molded.

### Example 10

Thermoplastic polyurethane resin was produced in the same manner as in Example 1, except that the amount of PTG1000SN(P) of Example 1 was changed to 33.51 parts by mass, 1,4-BIC(2) was changed to 43.14 parts by mass, and the molar ratio of isosorbide to 1,4-butanediol (isosorbide:1,4-BD) was changed to 60:40; and a sheet, block, and eyewear lens were molded.

### Example 11

Thermoplastic polyurethane resin was produced in the same manner as in Example 1, except that the amount of PTG1000SN(P) of Example 1 was changed to 33.51 parts by mass, 1,4-BIC(2) was changed to 41.30 parts by mass, and instead of the mixture of isosorbide and 1,4-butanediol, a mixture of isosorbide and 1,6-hexanediol (1,6-HD, manufactured by Wako Pure Chemical Industries, Ltd.) (isosorbide: 1,6-HD = 80:20(molar ratio)) was used; and a sheet, block, and eyewear lens were molded.

### Comparative Example 6

Thermoplastic polyurethane resin was produced in the same manner as in Example 1, except that the amount of PTG1000SN(P) of Example 1 was changed to 33.51 parts by mass, 1,4-BIC(2) was changed to 42.51 parts by mass, and instead of the mixture of isosorbide and 1,4-butanediol, a mixture of isosorbide and 1,2-ethylene glycol (1,2-ED, manufactured by Wako Pure Chemical Industries, Ltd.) (isosorbide: 1,2-ED = 80:20(molar ratio)) was used; and a sheet, block, and eyewear lens were molded.

### Example 12

Thermoplastic polyurethane resin was produced in the same manner as in Example 1, except that instead of PTG1000SN(P) of Example 1, a mixture (molar ratio 1:1) of 12.04 parts by mass of PTG1000SN(P) and 23.30 parts by mass of PTG2000SN(P) (manufactured by Hodogaya Chemical Co., LTD., polytetramethylene ether glycol using biomass material, number average molecular weight 2000) was used, and the amount of 1,4-BIC(2) was changed to 40.06 parts by mass; and a sheet, block, and eyewear lens were molded.

### Example 13

Thermoplastic polyurethane resin was produced in the same manner as in Example 1, except that the amount of PTG1000SN(P) of Example 1 was changed to 33.51 parts by mass of PO3G H1000 (manufactured by ALLESSA, poly (tri methylene) ether glycol, number average molecular weight 1000), and the amount of 1,4-BIC(2) was changed to 41.89 parts by mass; and a sheet, block, and eyewear lens were molded.

### Example 14

Thermoplastic polyurethane resin was produced in the same manner as in Example 1, except that the amount of PTG1000SN(P) of Example 1 was changed to 33.47 parts by mass of PLACCEL 210N (manufactured by Daicel Corporation, poly (caprolactone) diol, number average molecular weight 1000), and the amount of 1,4-BIC(2) was changed to 41.94 parts by mass; and a sheet, block, and eyewear lens were molded.

### Example 15

Thermoplastic polyurethane resin was produced in the same manner as in Example 1, except that the amount of PTG1000SN(P) of Example 1 was changed to 33.52 parts by mass of UH-100 (manufactured by Ube Industries, Ltd., polycarbonate diol, number average molecular weight 1000), and the amount of 1,4-BIC(2) was changed to 41.88 parts by mass; and a sheet, block, and eyewear lens were molded.

### Example 16

Thermoplastic polyurethane resin was produced in the same manner as in Example 1, except that the amount of JPE-10 of Example 1 was changed to 0.08 parts by mass; and a sheet, block, and eyewear lens were molded.

### Example 17

Thermoplastic polyurethane resin was produced in the same manner as in Example 1, except that the amount of JPE-10 of Example 1 was changed to 1.50 parts by mass; and a sheet, block, and eyewear lens were molded.

### Example 18

Thermoplastic polyurethane resin was produced in the same manner as in Example 1, except that the amount of PTG1000SN(P) of Example 1 was changed to 35.41 parts by mass, and instead of 1,4-BIC(2), a mixture of 25.36 parts by mass of 1,4-BIC(2) and 14.64 parts by mass of hexamethylene diisocyanate (HDI, manufactured by Mitsui Chemicals, Inc., trade name TAKENATE 700) (1,4-BIC:HDI = 60:40(molar ratio)) was used; and a sheet, block, and eyewear lens were molded.

### Example 19

Thermoplastic polyurethane resin was produced in the same manner as in Example 1, except that the material component produced with the formulation of Example 1 was allowed to react by a known method of one shot method; and a sheet, block, and eyewear lens were molded.

### Example 20

Thermoplastic polyurethane resin was produced in the same manner as in Example 1, except that in the method of Example 1, the reaction mixture liquid was poured onto a Teflon^{®} sheet, and then allowed to react at 100^{°}C for 2 hours, and at 100^{°}C for 20 hours; and a sheet, block, and eyewear lens were molded.

### Example 21

Thermoplastic polyurethane resin was produced in the same manner as in Example 1, except that in the method of Example 1, the reaction mixture liquid was poured onto a Teflon^{®} sheet, and then allowed to react at 280^{°}C for 2 hours, and at 100^{°}C for 20 hours; and a sheet, block, and eyewear lens were molded.

### <Evaluation>

The sheet, block, and eyewear lens of the thermoplastic polyurethane resin produced in Examples and Comparative Examples were evaluated as follows. The results are shown in Tables 1 to 3.

Table 1 to Table 3 also show the mixing formulation (based on mol) of Examples and Comparative Examples.

### 1) Appearance

The sheet produced in Examples and Comparative Examples was visually checked, and presence and absence of cloudiness, coloring, blooming, and bleeding were checked. The sheet without these appearance defects were evaluated as [3], with slight appearance defect was evaluated as [2], and with obvious appearance defect was evaluated as [1].

### 2) Transmittance and haze

HAZE METER NDH-5000 manufactured by Nippon Denshoku Industries Co., Ltd. was used as the measuring device, and the transmittance and haze of the sheet produced in Examples and Comparative Examples were measured.

### 3) Hardness

The ASKER type D durometer was pressed against the block produced in Examples and Comparative Examples horizontally in accordance with JIS K7311(1995), and after 15 seconds, the stabilized value of the meter was read.

### 4) Impact resistance (Izod impact)

The sheet produced in Examples and Comparative Examples was punched out with a suitable dumbbell for JIS K7110(1999), with notch (method A), and Izod test was carried out at 23^{°}C.

### 5) Heat resistance

A strip of a test piece with a width of 10 mm was cut out from the sheet produced in Examples and Comparative Examples, and dynamic viscoelasticity spectrum was measured using a dynamic viscoelasticity measuring apparatus (manufactured by Itk, model:DVA-220), under conditions of a measurement start temperature of -100^{°}C, temperature increase rate of 5^{°}C/min, tensile mode, length between standard lines 20 mm, static/dynamic stress ratio 1.8, and measurement frequency of 10Hz. Then, storage modulus E' at 70^{°}C was measured.

### 6) Chemical resistance

The sheet produced in Examples and Comparative Examples was punched out into a plate with 74.4 mm × 66.5 mm with a dumbbell, and 0.5g of Nivea cream (trade name, Nivea manufactured by Kao Corporation) was applied on one side thereof, and thereafter the sheet was kept in an oven heated to 80^{°}C for 24 hours.

After it was kept in the temperature described above, the cream on the surface was washed off with water, and changes in appearance were checked. The appearance of the plates was checked.

Those plates with no changes in appearance were evaluated as [3], those with roughness found on the surface was evaluated as [2], and those with significant roughness on the surface, changes in the size, or warping were evaluated as [1].

### 7) Solvent resistance

The sheet produced in Examples and Comparative Examples was punched out using a dumbbell to give disks with a diameter of 30 mm, and they were immersed in isopropyl alcohol under room temperature for 5 days. After taken out from isopropyl alcohol, the disk surface was wiped out with waste cloth, and changes in appearance were checked.

Those disks with no change in appearance were evaluated as [3], those with roughness on the surface were evaluated as [2], those with significant roughness on the surface, changes in size, or warping were evaluated as [1].

### 8) Refraction (nd) and Abbe number ( v d)

The refraction and Abbe number of the lens main portion produced in Examples and Comparative Examples were measured at 20^{°}C using Pulfrich refractometer.

### 9) Lens appearance

The lens main portion produced in Examples and Comparative Examples was checked visually, and presence and absence of cloudiness, coloring, blooming, and bleeding were checked.

The lens main portion without these appearance defects was evaluated as [3], with slight appearance defect was evaluated as [2], and with obvious appearance defect was evaluated as [1].

### 10) Coating adherence

In the eyewear lens produced in Examples and Comparative Examples, adherence of lens main portion, hard coat layer, and anti-reflective layer was evaluated as below.

That is, in a 1cm × 1cm region of the eyewear lens, a grid with 100 cells of 1 mm × 1 mm was created.

A Nichiban tape (manufactured by Nichiban CT-408AP-18) was attached to the grid in the region, and repeatedly peeled off five times.

At this time, occurrence of removal of the hard coat layer and anti-reflective layer from the lens main portion was checked.

Those with removal of 10 or less cells of the layers were evaluated as [3], 11 to 20 were evaluated as [2], 21 or more was evaluated as [1].

### 11) Lens: energy to failure

A high speed puncture impact testing machine [HYDROSHOT] (model HITS-P10) manufactured by Shimadzu Corporation was used to evaluate high-speed impact resistance of the eyewear lens.

To be specific, the eyewear lens produced in Examples and Comparative Examples was fixed on a holder with a diameter 40 mm in accordance with JIS K7211-2(2006), and a striker with a diameter of 20 mm was pressed against the lens to penetrate therethrough at a speed of 4.4 m/sec, and energy to failure (J) generated at the time of impact was measured. The above-described test was repeated three times, and the energy to failure was calculated as an average value.

**[Table 1]**

| No. | | | Ex. 1 | Ex. 2 | Comp. Ex. 1 | Comp. Ex. 2 | Comp. Ex. 3 | Comp. Ex. 4 | Comp. Ex. 5 | Ex. 3 | Ex. 4 |
|---|---|---|---|---|---|---|---|---|---|---|---|
| Polyisocyanate component (mol%) | 1,4-BIC (1) | Trans 98% | - | - | - | - | - | - | - | 100 | - |
| | 1,4-BIC (2) | Trans 86% | 100 | 100 | 100 | 100 | 40 | 100 | 100 | - | - |
| | 1,4-BIC (3) | Trans 68% | - | - | - | - | - | - | - | - | 100 |
| | HDI | - | - | - | - | - | - | - | - | - | - |
| | NBDI | - | - | - | - | - | 60 | - | - | - | - |
| Macropolyol (mol%) | PTG1000SN(P) | 1000 | 100 | 100 | 100 | 100 | 100 | 100 | 100 | 100 | 100 |
| | PTG2000SN(P) | 2000 | - | - | - | - | - | - | - | - | - |
| | PO3GH1000 | 1000 | - | - | - | - | - | - | - | - | - |
| | PLACCEL 210N | 1000 | - | - | - | - | - | - | - | - | - |
| | UH-100 | 1000 | - | - | - | - | - | - | - | - | - |
| Chain extender (mol%) | Isosorbide | | 80 | 75 | 58 | 97 | 80 | - | 100 | 80 | 80 |
| | Aliphatic diol | CHDM | - | - | - | - | - | 80 | - | - | - |
| | | 1,4-BD | 20 | 25 | 42 | 3 | 20 | 20 | - | 20 | 20 |
| | | 1,5-PeD | - | - | - | - | - | - | - | - | - |
| | | 1,6-HD | - | - | - | - | - | - | - | - | - |
| | | 1,3-BD | - | - | - | - | - | - | - | - | - |
| | | 1,3-PrD | - | - | - | - | - | - | - | - | - |
| | | 1,2-EG | - | - | - | - | - | - | - | - | - |
| Phosphorous acid antioxidant | | Parts by mass / reaction product | 0.5 | 0.5 | 0.5 | 0.5 | 0.5 | 0.5 | 0.5 | 0.5 | 0.5 |
| Chain extension reaction conditions | | Temperature (°C) | 180 | 180 | 180 | 180 | 180 | 180 | 180 | 180 | 180 |
| | | Time (hour) | 2 | 2 | 2 | 2 | 2 | 2 | 2 | 2 | 2 |
| Evaluation | Appearance | Visual check | 3 | 3 | 3 | 1 | 3 | 3 | 1 | 3 | 3 |
| | Transmittance | % | 92 | 88 | 91 | 62 | 92 | 92 | 58 | 92 | 92 |
| | Haze | % | 2 | 2 | 1 | 81 | 1 | 1 | 87 | 3 | 1 |
| | Hardness (25°C) | ASKER (D) | 75 | 74 | 62 | 74 | 70 | 71 | 75 | 77 | 69 |
| | Impact resistance | kJ/m2 | 62 | 78 | 75 | 9 | 7 | 9 | 8 | 82 | 65 |
| | Heat resistance | MPa | 119 | 137 | 18 | 246 | 124 | 14 | 253 | 142 | 96 |
| | Chemical resistance | Visual check | 3 | 3 | 3 | 3 | 1 | 3 | 3 | 3 | 3 |
| | Solvent resistance | Visual check | 3 | 3 | 3 | 3 | 1 | 3 | 3 | 3 | 3 |
| | Refraction (nd) | - | 1.51 | 1.51 | 1.51 | - | 1.51 | 1.51 | - | 1.51 | 1.51 |
| | Abbe (d) | - | 53 | 54 | 53 | - | 53 | 54 | - | 53 | 54 |
| | Lens appearance | Visual check | 3 | 3 | 3 | 1 | 3 | 3 | 1 | 3 | 3 |
| | Coating adherence | Visual check | 3 | 3 | 3 | - | 3 | 3 | - | 3 | 3 |
| | Lens: energy to failure | J | 30 | 34 | 32 | 10 | 12 | 11 | 11 | 35 | 28 |

**[Table 2]**

| No. | | | Ex. 5 | Ex. 6 | Ex. 7 | Ex. 8 | Ex. 9 | Ex. 10 | Ex. 11 | Comp. Ex. 6 | Ex. 12 |
|---|---|---|---|---|---|---|---|---|---|---|---|
| Polyisocyanate component (mol%) | 1,4-BIC (1) | Trans 98% | - | - | - | - | - | - | - | - | - |
| | 1,4-BIC (2) | Trans 86% | 100 | 100 | 100 | 100 | 100 | 100 | 100 | 100 | 100 |
| | 1,4-BIC (3) | Trans 68% | - | - | - | - | - | - | - | - | - |
| | HDI | - | - | - | - | - | - | - | - | - | - |
| | NBDI | - | - | - | - | - | - | - | - | - | - |
| Macropolyol (mol%) | PTG1000SN(P) | 1000 | 100 | 100 | 100 | 100 | 100 | 100 | 100 | 100 | 50 |
| | PTG2000SN(P) | 2000 | - | - | - | - | - | - | - | - | 50 |
| | PO3GH1000 | 1000 | - | - | - | - | - | - | - | - | - |
| | PLACCEL 210N | 1000 | - | - | - | - | - | - | - | - | - |
| | UH-100 | 1000 | - | - | - | - | - | - | - | - | - |
| Chain extender (mol%) | Isosorbide | | 80 | 80 | 80 | 80 | 90 | 60 | 80 | 80 | 80 |
| | Aliphatic diol | CHDM | - | - | - | 20 | - | - | - | - | - |
| | | 1,4-BD | - | - | - | - | 10 | 40 | - | - | 20 |
| | | 1,5-PeD | 20 | - | - | - | - | - | - | - | - |
| | | 1,6-HD | - | - | - | - | - | - | 20 | - | - |
| | | 1,3-BD | - | 20 | - | - | - | - | - | - | - |
| | | 1,3-PrD | - | - | 20 | - | - | - | - | - | - |
| | | 1,2-EG | - | - | - | - | - | - | - | 20 | - |
| Phosphorous acid antioxidant | | Parts by mass /reaction product | 0.5 | 0.5 | 0.5 | 0.5 | 0.5 | 0.5 | 0.5 | 0.5 | 0.5 |
| Chain extension reaction conditions | | Temperature (°C) | 180 | 180 | 180 | 180 | 180 | 180 | 180 | 180 | 180 |
| | | Time (hour) | 2 | 2 | 2 | 2 | 2 | 2 | 2 | 2 | 2 |
| Evaluation | Appearance | Visual check | 3 | 3 | 3 | 3 | 3 | 3 | 2 | 1 | 2 |
| | Transmittance | % | 86 | 92 | 91 | 92 | 88 | 92 | 85 | 66 | 84 |
| | Haze | % | 7 | 1 | 1 | 1 | 4 | 1 | 9 | 31 | 9 |
| | Hardness (25°C) | ASKER (D) | 73 | 73 | 72 | 74 | 70 | 68 | 72 | 71 | 68 |
| | Impact resistance | kJ/m2 | 68 | 18 | 59 | 22 | 63 | 78 | 65 | 22 | 17 |
| | Heat resistance | MPa | 139 | 164 | 174 | 170 | 220 | 33 | 78 | 349 | 650 |
| | Chemical resistance | Visual check | 3 | 3 | 3 | 2 | 3 | 3 | 3 | 1 | 2 |
| | Solvent resistance | Visual check | 3 | 3 | 3 | 3 | 3 | 3 | 3 | 1 | 2 |
| | Refraction (nd) | - | 1.51 | 1.51 | 1.51 | 1.51 | 1.51 | 1.51 | 1.51 | - | 1.51 |
| | Abbe (d) | - | 55 | 54 | 56 | 54 | 54 | 53 | 54 | - | 54 |
| | Lens appearance | Visual check | 3 | 3 | 3 | 3 | 3 | 3 | 2 | 1 | 2 |
| | Coating adherence | Visual check | 3 | 3 | 3 | 3 | 3 | 3 | 3 | - | 3 |
| | Lens: energy to failure | J | 30 | 20 | 28 | 22 | 28 | 31 | 14 | 29 | 13 |

**[Table 3]**

| No. | | | Ex. 13 | Ex. 14 | Ex. 15 | Ex. 16 | Ex. 17 | Ex. 18 | Ex. 19 | Ex. 20 | Ex.21 |
|---|---|---|---|---|---|---|---|---|---|---|---|
| Polyisocyanate component (mol%) | 1,4-BIC (1) | Trans 98% | - | - | - | - | - | - | - | - | - |
| | 1,4-BIC (2) | Trans 86% | 100 | 100 | 100 | 100 | 100 | 60 | 100 | 100 | 100 |
| | 1,4-BIC (3) | Trans 68% | - | - | - | - | - | - | - | - | - |
| | HDI | - | - | - | - | - | - | 40 | - | - | - |
| | NBDI | - | - | - | - | - | - | - | - | - | - |
| Macropolyol (mol%) | PTG1000SN(P) | 1000 | - | - | - | 100 | 100 | 100 | 100 | 100 | 100 |
| | PTG2000SN(P) | 2000 | - | - | - | - | - | - | - | - | - |
| | PG3GH1000 | 1000 | 100 | - | - | - | - | - | - | - | - |
| | PLACCEL 210N | 1000 | - | 100 | - | - | - | - | - | - | - |
| | UH-100 | 1000 | - | - | 100 | - | - | - | - | - | - |
| Chain extender (mol%) | Isosorbide | | 80 | 80 | 80 | 80 | 80 | 80 | 80 | 80 | 80 |
| | Aliphatic diol | CHDM | - | - | - | - | - | - | - | - | - |
| | | 1,4-BD | 20 | 20 | 20 | 20 | 20 | 20 | 20 | 20 | 20 |
| | | 1,5-PeD | - | - | - | - | - | - | - | - | - |
| | | 1,6-HD | - | - | - | - | - | - | - | - | - |
| | | 1,3-BD | - | - | - | - | - | - | - | - | - |
| | | 1,3-PrD | - | - | - | - | - | - | - | - | - |
| | | 1,2-EG | - | - | - | - | - | - | - | - | - |
| Phosphorous acid antioxidant | | Parts by mass /reaction product | 0.5 | 0.5 | 0.5 | 0.08 | 1.5 | 0.5 | 0.5 | 0.5 | 0.5 |
| Chain extension reaction conditions | | Temperature (°C) | 180 | 180 | 180 | 180 | 180 | 180 | One Shot | 100 | 280 |
| | | Time (hour) | 2 | 2 | 2 | 2 | 2 | 2 | | 2 | 2 |
| Evaluation | Appearance | Visual check | 3 | 3 | 2 | 2 | 2 | 3 | 2 | 2 | 2 |
| | Transmittance | % | 92 | 89 | 92 | 92 | 92 | 92 | 92 | 92 | 92 |
| | Haze | % | 1 | 1 | 1 | 2 | 2 | 1 | 2 | 2 | 1 |
| | Hardness (25°C) | ASKER (D) | 74 | 76 | 76 | 75 | 75 | 65 | 73 | 72 | 74 |
| | Impact resistance | kJ/m2 | 65 | 18 | 13 | 61 | 66 | 67 | 58 | 56 | 63 |
| | Heat resistance | MPa | 108 | 27 | 231 | 115 | 122 | 23 | 105 | 101 | 124 |
| | Chemical resistance | Visual check | 3 | 2 | 2 | 3 | 3 | 2 | 3 | 3 | 3 |
| | Solvent resistance | Visual check | 3 | 3 | 3 | 3 | 3 | 3 | 3 | 3 | 3 |
| | Refraction (nd) | - | 1.51 | 1.51 | 1.51 | 1.51 | 1.51 | 1.51 | 1.51 | 1.51 | 1.51 |
| | Abbe (d) | - | 54 | 54 | 55 | 53 | 53 | 55 | 53 | 53 | 53 |
| | Lens appearance | Visual check | 3 | 1 | 2 | 2 | 2 | 3 | 2 | 2 | 2 |
| | Coating adherence | Visual check | 3 | 1 | 3 | 3 | 3 | 3 | 3 | 3 | 3 |
| | Lens: energy to failure | J | 31 | 14 | 11 | 28 | 30 | 31 | 27 | 25 | 27 |

The abbreviations in Tables are described in detail below.
1,4-BIC(1): 1,4-bis(isocyanatomethyl) cyclohexane (trans isomer/cis isomer ratio 98/2) of Production Example 1
1,4-BIC(2): 1,4-bis(isocyanatomethyl) cyclohexane (trans isomer/cis isomer ratio 86/14) of Production Example 2
1,4-BIC(3): 1,4-bis(isocyanatomethyl) cyclohexane (trans isomer/cis isomer ratio 68/32) of Production Example 3
HDI: hexamethylene diisocyanate, manufactured by Mitsui Chemicals, Inc., trade name TAKENATE 700
NBDI: diisocyanatomethyl bicyclo [2,2,1]-heptane, manufactured by Mitsui Chemicals, Inc.
PTG1000SN(P): manufactured by Hodogaya Chemical Co., LTD., polytetramethylene ether glycol using biomass material (PTMEG), number average molecular weight 1000
PTG2000SN(P): manufactured by Hodogaya Chemical Co., LTD., polytetramethylene ether glycol using biomass material (PTMEG), number average molecular weight 2000
PO3G H1000: manufactured by ALLESSA, poly (tri methylene) ether glycol, number average molecular weight 1000)
PLACCEL 210N: manufactured by Daicel Corporation, poly (caprolactone) diol (PCL), number average molecular weight 1000
UH-100: manufactured by Ube Industries, Ltd., polycarbonate diol (PCD), number average molecular weight 1000)
CHDM: cyclohexanedimethanol
1,4-BD: 1,4-butanediol
1,5-PeD: 1,5-pentanediol
1,6-HD: 1,6-hexanediol
1,3-BD: 1,3-butanediol
1,3-PrD: 1,3-propanediol
1,2-EG: 1,2-ethylene glycol

### Industrial Applicability

The thermoplastic polyurethane resin and optical polyurethane resin of the present invention are suitably used for a display panel cover plate, eyewear material, eyewear lens, eyewear frame, and automobile interior/exterior component.

## Claims

1. Thermoplastic polyurethane resin comprising a reaction product of a polyisocyanate component containing 50 mol% or more of an isocyanate group of 1,4-bis(isocyanatomethyl) cyclohexane relative to a total mol of the isocyanate group, and
a polyol component containing macropolyol, isosorbide, and aliphatic diol with 3 to 8 carbon atoms; wherein
relative to a total mol of the isosorbide and the aliphatic diol, the isosorbide content is 60 mol% or more and 95 mol% or less.

2. The thermoplastic polyurethane resin according to Claim 1, wherein
the 1,4-bis(isocyanatomethyl) cyclohexane contains 70 mol% or more and 95 mol% or less of trans-1,4-bis(isocyanatomethyl) cyclohexane.

3. The thermoplastic polyurethane resin according to Claim 1, wherein
the aliphatic diol is straight chain alkane diol with 3 to 5 carbon atoms and/or cyclic alkane diol with 6 to 8 carbon atoms.

4. The thermoplastic polyurethane resin according to Claim 1, wherein
the macropolyol contains polyoxy straight chain alkylene (2 to 4 carbon atoms) polyol with a number average molecular weight of 600 or more and 1300 or less.

5. The thermoplastic polyurethane resin according to Claim 1,
containing 0.1 to 0.8 parts by mass of a phosphorous acid antioxidant relative to 100 parts by mass of the reaction product.

6. Optical polyurethane resin comprising
the thermoplastic polyurethane resin according to Claim 1.

7. A cover plate for a display panel of a smart device, comprising the optical polyurethane resin according to Claim 6.

8. An eyewear material comprising the thermoplastic polyurethane resin according to Claim 1.

9. An eyewear lens comprising an eyewear material according to Claim 8.

10. The eyewear lens according to Claim 9, comprising
a lens main portion including the eyewear material, and
a hard coat layer and/or anti-reflective layer formed on at least one side of the lens main portion.

11. An eyewear frame comprising the eyewear material according to Claim 8.

12. An automobile interior/exterior component comprising
the thermoplastic polyurethane resin according to Claim 1.

13. A method for producing thermoplastic polyurethane resin, the method including:
a prepolymer synthesis step, in which at least allowing a polyisocyanate component containing 50 mol% or more of an isocyanate group of 1,4-bis(isocyanatomethyl) cyclohexane relative to a total mol of the isocyanate group to react with,
macropolyol to produce an isocyanate group-terminated prepolymer; and
a chain extension step, in which the isocyanate group-terminated prepolymer, isosorbide, and aliphatic diol with 3 to 8 carbon atoms are at least allowed to react and cure to produce thermoplastic polyurethane resin, wherein
relative to a total mol of the isosorbide and the aliphatic diol, the isosorbide content is 60 mol% or more and 95 mol% or less.

14. The method for producing thermoplastic polyurethane resin according to Claim 13, wherein
the curing temperature in the chain extension step is 150^{°}C or more and 240^{°}C or less.

## Patentansprüche

1. Thermoplastisches Polyurethanharz, umfassend ein Reaktionsprodukt einer Polyisocyanatkomponente, enthaltend 50 Mol-% oder mehr einer Isocyanatgruppe von 1,4-Bis(isocyanatomethyl)cyclohexan, bezogen auf einen Gesamtmolgehalt der Isocyanatgruppe, und
eine Polyolkomponente, enthaltend Makropolyol, Isosorbid und aliphatisches Diol mit 3 bis 8 Kohlenstoffatomen; worin
bezogen auf einen Gesamtmolgehalt des Isosorbids und des aliphatischen Diols, der Isosorbidgehalt 60 Mol% oder mehr und 95 Mol% oder weniger beträgt.

2. Thermoplastisches Polyurethanharz gemäß Anspruch 1, worin
das 1,4-Bis(isocyanatomethyl)cyclohexan 70 Mol% oder mehr und 95 Mol% oder weniger trans-1,4-Bis(isocyanatomethyl)cyclohexan enthält.

3. Thermoplastisches Polyurethanharz gemäß Anspruch 1, worin
das aliphatische Diol ein geradkettiges Alkandiol mit 3 bis 5 Kohlenstoffatomen und/oder ein cyclisches Alkandiol mit 6 bis 8 Kohlenstoffatomen ist.

4. Thermoplastisches Polyurethanharz gemäß Anspruch 1, worin
das Makropolyol geradkettiges Polyoxyalkylen (2 bis 4 Kohlenstoffatome)-Polyol mit einem zahlengemittelten Molekulargewicht von 600 oder mehr und 1300 oder weniger enthält.

5. Thermoplastisches Polyurethanharz gemäß Anspruch 1,
enthaltend 0,1 bis 0,8 Massenteile eines Phosphorsäure-Antioxidationsmittels bezogen auf 100 Massenteile des Reaktionsprodukts.

6. Optisches Polyurethanharz, umfassend
das thermoplastische Polyurethanharz gemäß Anspruch 1.

7. Abdeckplatte für eine Anzeigetafel eines Smartgeräts, umfassend das optische Polyurethanharz gemäß Anspruch 6.

8. Brillenmaterial, umfassend das thermoplastische Polyurethanharz gemäß Anspruch 1.

9. Brillenglas, umfassend ein Brillenmaterial gemäß Anspruch 8.

10. Brillenglas gemäß Anspruch 9, umfassend
einen Linsenhauptteil, enthaltend das Brillenmaterial, und
eine Hartschicht und/oder eine Antireflexionsschicht, gebildet auf mindestens einer Seite des Linsenhauptteils.

11. Brillengestell, umfassend das Brillenmaterial gemäß Anspruch 8.

12. Automobilbauteil für den Innen- und Außenbereich, umfassend
das thermoplastische Polyurethanharz gemäß Anspruch 1.

13. Verfahren zur Herstellung eines thermoplastischen Polyurethanharzes, das Verfahren enthaltend:
einen Präpolymersyntheseschritt, in dem mindestens eine Polyisocyanatkomponente, enthaltend 50 Mol-% oder mehr einer Isocyanatgruppe von 1,4-Bis(isocyanatomethyl)cyclohexan, bezogen auf einen Gesamtmolgehalt der Isocyanatgruppe, mit,
einem Makropolyol zur Reaktion gebracht wird, um ein Präpolymer mit endständigen Isocyanatgruppen herzustellen; und
einen Kettenverlängerungsschritt, in dem mindestes das Präpolymer mit endständigen Isocyanatgruppen, Isosorbid und aliphatisches Diol mit 3 bis 8 Kohlenstoffatomen zur Reaktion und Aushärtung gebracht werden, um ein thermoplastisches Polyurethanharz herzustellen, worin
bezogen auf den Gesamtmolgehalt des Isosorbids und des aliphatischen Diols, der Isosorbidgehalt 60 Mol-% oder mehr und 95 Mol-% oder weniger beträgt.

14. Verfahren zur Herstellung von thermoplastischem Polyurethanharz gemäß Anspruch 13, worin
die Härtungstemperatur in dem Kettenverlängerungsschritt 150°C oder mehr und 240°C oder weniger beträgt.

## Revendications

1. Résine de polyuréthane thermoplastique comprenant un produit réactionnel d'un composant polyisocyanate contenant 50 % en moles ou plus d'un groupe isocyanate de 1,4-bis(isocyanatométhyl)cyclohexane par rapport à un nombre total de moles du groupe isocyanate, et
un composant polyol contenant un macropolyol, de l'isosorbide et un diol aliphatique comportant 3 à 8 atomes de carbone ; dans laquelle
par rapport à un nombre total de moles de l'isosorbide et du diol aliphatique, la teneur en isosorbide est de 60 % en moles ou plus et de 95 % en moles ou moins.

2. Résine de polyuréthane thermoplastique selon la revendication 1, dans laquelle
le 1,4-bis(isocyanatométhyl)cyclohexane contient 70 % en moles ou plus et 95 % en moles ou moins de trans-1,4-bis(isocyanatométhyl)cyclohexane.

3. Résine de polyuréthane thermoplastique selon la revendication 1, dans laquelle
le diol aliphatique est un alcane diol à chaîne droite avec 3 à 5 atomes de carbone et/ou un alcane diol cyclique avec 6 à 8 atomes de carbone.

4. Résine de polyuréthane thermoplastique selon la revendication 1, dans laquelle
le macropolyol contient un alkylène (2 à 4 atomes de carbone) polyol à chaîne droite polyoxy avec un poids moléculaire moyen en nombre de 600 ou plus et de 1300 ou moins.

5. Résine de polyuréthane thermoplastique selon la revendication 1,
contenant 0,1 à 0,8 partie en masse d'un antioxydant d'acide phosphoreux par rapport à 100 parties en masse du produit réactionnel.

6. Résine de polyuréthane optique comprenant la résine de polyuréthane thermoplastique selon la revendication 1.

7. Plaque de couverture pour un panneau d'affichage d'un dispositif intelligent, comprenant la résine de polyuréthane optique selon la revendication 6.

8. Matériau de lunettes comprenant la résine de polyuréthane thermoplastique selon la revendication 1.

9. Verre de lunettes comprenant un matériau de lunettes selon la revendication 8.

10. Verre de lunettes selon la revendication 9, comprenant
une partie principale de verre incluant le matériau de lunettes, et
une couche de revêtement dure et/ou une couche antireflet formées sur au moins un côté de la partie principale de verre.

11. Monture de lunettes comprenant le matériau de lunettes selon la revendication 8.

12. Composant intérieur/extérieur d'automobile comprenant la résine de polyuréthane thermoplastique selon la revendication 1.

13. Procédé de production de résine de polyuréthane thermoplastique, le procédé incluant :
une étape de synthèse de prépolymère, dans laquelle il est au moins permis à un composant polyisocyanate contenant 50 % en moles ou plus d'un groupe isocyanate de 1,4-bis(isocyanatométhyl)cyclohexane par rapport à un nombre total de moles du groupe isocyanate de réagir avec
un macropolyol pour produire un prépolymère terminé par un groupe isocyanate ; et
une étape d'allongement de chaîne, dans laquelle il est au moins permis au prépolymère terminé par un groupe isocyanate, à l'isosorbide et au diol aliphatique comportant 3 à 8 atomes de carbone de réagir et de durcir pour produire une résine de polyuréthane thermoplastique, dans lequel
par rapport à un nombre total de moles de l'isosorbide et du diol aliphatique, la teneur en isosorbide est de 60 % en moles ou plus et de 95 % en moles ou moins.

14. Procédé de production de résine de polyuréthane thermoplastique selon la revendication 13,
dans lequel
la température de durcissement dans l'étape d'allongement de chaîne est de 150 °C ou plus et de 240 °C ou moins.
